# EUROPÄISCHE PATENTSCHRIFT

(11) **EP 3 915 831 B1**
(45) Veröffentlichungstag und Bekanntmachung des Hinweises auf die Patenterteilung: **29.11.2023**
(21) Anmeldenummer: 21175063.3
(22) Anmeldetag: 20.05.2021
(51) Int. Cl.: B60P 1/64, G05D 1/02

(54) **LASTKRAFTWAGENGESPANN UND ANHÄNGEFAHRZEUG MIT EINER SIGNALVERARBEITUNGSEINRICHTUNG**
TRAILER TRAIN AND TRAILER WITH A SIGNAL PROCESSING DEVICE
ATTELAGE ET VÉHICULE TRACTÉ DOTÉ D'UN DISPOSITIF DE TRAITEMENT DU SIGNAL

(30) Priorität: 28.05.2020 DE 202020103091 U
(43) Veröffentlichungstag der Anmeldung: 01.12.2021
(73) Patentinhaber: Hüffermann Transportsysteme GmbH, 16845 Neustadt/Dosse (DE)
(72) Erfinder: Reuter, Henry, 14612 Falkensee (DE)
(74) Vertreter: Eisenführ Speiser

(56) Entgegenhaltungen:
- EP-A1- 2 634 071
- DE-A1- 19 526 702
- DE-A1-102016 011 324
- US-A1- 2018 364 738

## Beschreibung

Die Erfindung betrifft ein Anhängefahrzeug mit einer Signalverarbeitungseinrichtung zum Erzeugen von Steueranweisungen für das Ausrichten eines Lastkraftwagens und/oder eines auf dem Lastkraftwagen aufgesetzten Transportbehälters relativ zu dem Anhängefahrzeug, um den Transportbehälter von dem Lastkraftwagen auf das Anhängefahrzeug überzusetzen und/oder das Anhängefahrzeug in umgekehrter Richtung zu entladen.

Der Begriff "Transportbehälter" bezieht sich insbesondere auf Rollbehälter, also Behälter mit Rollen, die vielfach zum Sammeln und Transportieren von Schütt- und Stückgütern verwendet werden, umfasst aber auch Absetzbehälter, Absetzmulden oder dergleichen Behälter mit analoger Funktion.

Absetzbehälter weisen einen näherungsweise quaderförmigen Behälter auf, mit jeweils zwei Aufnahmeteilen an den zwei Längsseiten des Absetzbehälters, vorwiegend in der Form von Aufnahmebolzen. Die Aufnahmebolzen sind in Längsrichtung des Absetzbehälters beabstandet und zudem derart relativ zum Schwerpunkt des Absetzbehälters angeordnet, dass sich dieser bei Aufsetz- und Absetzvorgängen oder bei Umsetzvorgängen - bei gleichmäßiger Beladung des Absetzbehälters - ungefähr im Gleichgewicht befindet, somit bspw. nicht unkontrolliert um seine Querachse kippt. An jedem dieser Aufnahmebolzen greift bei den vorgenannten Vorgängen ein karabinerförmiger Haken eines Ladegeräts des Lastkraftwagens an.

Zu den Rollbehältern zählen z.B. standardisierte Abrollbehälter mit einem quaderförmigen Behälter, einem Aufnahmeteil vorwiegend in Form eines Aufnahmebügels an der Stirnseite für ein Ladegerät eines Lastkraftwagens, Hecktüren sowie einem Unterrahmen mit einem Rollenpaar, das den Rollbehälterverrollbar macht. Darüber hinaus gibt es viele Sonderkonstruktionen, die das Abrollbehältersystem nutzen oder modifiziert verwenden, die mit unterschiedlichen Aufbauten und mitunter auch mit mehreren Rollenpaaren ausgestattet sind. Ein Rollbehälter der hier betroffenen Art, ist ein Behälter oder auch ein Spezialaufbau, der Laufrollen für die Aufsetz- und Absetzvorgänge oder die Umsetzvorgänge nutzt und ein Aufnahmeteil, z.B. einen Aufnahmebügel, besitzt, an dem ein Ladegerät, z.B. ein Hakengerät, eines Lastkraftwagens angreifen kann.

In US 2018/0364738 A1 ist ein vollautonomisches elektrisches Gespann aus einem Zugfahrzeug und einem Anhängefahrzeug beschrieben, ein Übersetzen von Transportbehältern jedoch nicht erwähnt.

In DE 10 2016 011 324 A1 ist ein automatisches Ankoppeln und ein autonomes Heranfahren eines Zugfahrzeugs an ein Anhängefahrzeug, um das Anhängefahrzeug an das Zugfahrzeug anzukoppeln, beschrieben, ein Übersetzen von Transportbehältern jedoch nicht erwähnt.

In DE 195 26 702 A1 ist das Rangieren eines BDF-Anhängers in die Aufnahmeposition unter einem Gestell für einen Wechselaufbau beschrieben, ein Übersetzen von Transportbehältern jedoch nicht erwähnt.

Die nachstehende Beschreibung konzentriert sich vornehmlich auf eine Darstellung des Erfindungsgedankens anhand eines Rollbehälters. Dies schließt jedoch ausdrücklich eine analoge Anwendung auf Absetzbehälter, Absetzmulden oder ähnliche Transportgüter mit ein.

Spezielle Ladegeräte, das heißt, insbesondere Hakengeräte, aufgebaut auf einem Lastkraftwagen, heben und ziehen die Rollbehälter vom Boden auf eine Transportfläche des Lastkraftwagens oder schieben die Behälter wieder auf eine vorgesehene Abstellfläche. Der Begriff "Transportfläche" umfasst dabei auch partielle Auflagen, auf denen der Rollbehälter auf dem Lastkraftwagen oder auch auf dessen Ladegerät in einer Behältertransportposition steht.

Die mit dem Ladegerät ausgestatteten Lastkraftwagen können routinemäßig auch dazu genutzt werden, andere Lastkraftwagen mit einem Rollbehälter zu beladen oder zu entladen, indem sie den Behälter vom eigenen auf einen anderen Lastkraftwagen ohne Ladegerät, z.B. ein Anhängefahrzeug, schieben oder in umgekehrter Weise entladen.

Dieser Be- und Entladevorgang wird im Rahmen dieser Beschreibung als Übersetzvorgang bezeichnet. Durch das Übersetzen von Rollbehältern von einem Lastkraftwagen auf ein Anhängefahrzeug kann im Rahmen eines effizienten Behältertransports ein Lastkraftwagengespann, bestehend aus einem Lastkraftwagen und wenigstens einem Anhängefahrzeug, eingesetzt werden, wodurch sich die Wirtschaftlichkeit gegenüber dem Betrieb eines einzelnen Lastkraftwagens erhöht.

Lastkraftwagen mit eigenem Ladegerät sind mehrheitlich Fahrzeuge mit eigenem Fahrantrieb. Anhängefahrzeuge ohne eigene Ladegeräte für den Rollbehältertransportsind in der Regel Anhänger. Hiervon weichen nur sehr wenige Anwendungen ab. Zu den Ausnahmen gehört z.B. ein Lastkraftwagen ohne eigenes Ladegerät, der ersatzweise einen anhängerähnlichen Aufbau aufweist, um dann durch einen anderen, mit einem Ladegerät ausgestatteten Lastkraftwagen beladen und auf diese Weise zum Behältertransport genutzt zu werden. Gegebenenfalls auch zusammen mit einem ebenfalls durch den Lastkraftwagen mit Ladegerät zu beladenen Anhänger. Eine derartige Fahrzeugkonfiguration ist jedoch am Entladeort wieder auf einen Lastkraftwagen mit Ladegerät angewiesen. Eine solche Konfiguration ist daher wenig flexibel, sodass diese auf wenige Praxisfälle beschränkt bleibt.

Es sind weiterhin auch Ladegeräteaufbauten auf Anhängefahrzeugen, z.B. in Tandembauweise, bekannt, die größtenteils von Traktoren gezogen in der Landwirtschaft Verwendung finden. Diese sind in der Regel für die Eigenbeladung und Eigenentladung vorgesehen. Ein Übersetzen der Behälter auf Lastkraftwagen oder andere Anhängefahrzeuge ist wegen der ungünstigen Bedingungen nur theoretisch, das heißt, in Ausnahmefällen zu berücksichtigen.

In der nachstehenden Beschreibung wird für das bei dem Übersetzvorgang zu beladende oder zu entladende Fahrzeug der Begriff Anhängefahrzeug verwendet. Dieser Begriff soll die Bauausführungen des Drehschemel- und des Zentralachsanhängers sowie auch Sattelanhänger, die theoretisch geeignet aber im heutigen Rollbehältertransport nicht üblich sind, darüber hinaus sinngemäß auch die beschriebenen und mögliche weitere Sonderanwendungen umfassen. Das Fahrzeug, das ein Ladegerät aufweist und somit den Übersetzvorgang ausführt, wird nachfolgend als Lastkraftwagen bezeichnet. Zum Lastkraftwagen in dieser Anwendung gehört somit ein Fahrantrieb, mit dem die Annäherung an das Anhängefahrzeug zum Übersetzen der Rollbehälter erfolgt. Dass Fahrbewegungen auch von einem entsprechend ausgestatteten Anhängefahrzeug, also einem Anhänger, ausgeführt werden können, ändert die gewählten Begriffsfestlegungen nicht, soll jedoch von der Erfindung ebenfalls berücksichtigt werden.

Das zu beladende oder zu entladende Anhängefahrzeug kann beispielsweise Laufrollenbahnen besitzen, auf denen der Rollbehälter mit seinen Rollen abrollen kann Das Anhängefahrzeug kann auch mit einem Schlitten ausgestattet sein, über den der darauf platzierte Rollbehälter in Fahrzeuglängsrichtung mittels des Ladegerätes eines damit ausgerüsteten Lastkraftwagens in die Behältertransportposition bewegt wird, wobei der Behälter zuvor auf den die Beladung mit dem Ladegerät ausführenden Lastkraftwagen gehoben und gezogen wurde. Der Entladevorgang läuft in umgekehrter Weise wie der dargestellte Beladungsvorgang ab.

Aufgrund der Freiheitsgrade üblicher Ladegeräte, z.B. des weitverbreiteten Hakengerätes, die auch stabilitätsbedingt ausschließlich in einer Lastkraftwagenlängsebene zweidimensional von der Behältertransportstellung in die Behälteraufsetzstellung und umgekehrt verfahrbar sind, ist es beim Übersetzen eines Rollbehälters, z.B. auf ein Anhängefahrzeug, erforderlich, den Lastkraftwagen mit dem Ladegerät und dem aufgesetzten Rollbehälter präzise zu dem Anhängefahrzeug auszurichten. Überdies erlauben aber auch die Tolerierungen der Laufrollenbahnen bzw. des Schlittens des Anhängefahrzeugs nur geringe Abweichungen zwischen einer Längsachse des Lastkraftwagens und einer Längsachse des Anhängefahrzeugs hinsichtlich deren Versatz und deren Winkelstellung zueinander. Dies trifft ebenfalls für den Entladevorgang des Anhängefahrzeugs zu, das heißt, für das Herunterziehen des Rollbehälters vom Anhängefahrzeug auf das Ladegerät des Lastkraftwagens.

Der Prozess des Ausrichtens des Lastkraftwagens beim Aufnehmen des Rollbehälters von einem zu entladenden Anhängefahrzeug kann in zwei Schritte unterteilt werden.

Es ist ein ausschließlich von einem Fahrer gesteuerter Prozess, gegebenenfalls auch mit Unterstützung, das heißt, Einweisung durch Dritte. In einem ersten Schritt richtet der Fahrer den Lastkraftwagen mit Ladegerät relativ zum Anhängefahrzeug oder zum auf diesem aufgesetzten Rollbehälter aus. In einem zweiten Schritt wird der aufnehmende Arm des Ladegerätes auf dem Lastkraftwagen nach hinten in die Behälteraufnahmestellung verfahren. Dies geschieht durch und unter Beobachtung des Fahrers, gegebenenfalls auch mit Hilfe Dritter, mit dem Ziel, den Haken als aufnehmendes Teil des Ladegerätes mit dem Aufnahmebügel des Rollbehälters in Eingriff zu bringen. Je nach Erfahrung und Geschicklichkeit des Fahrers können beide Schritte gleichzeitig ausgeführt, das heißt, bei dem Annähern und dem Ausrichten des Lastkraftwagens mit Ladegerät relativ zum Anhängefahrzeug oder zum zu entladenden Rollbehälter kann auch das Ladegerät in die richtige Position gebracht werden. Bei einem schlecht einzusehenden Anhängerstandplatz, ungünstigen örtlichen Bedingungen oder mangelnder Erfahrung des Fahrers kann es dagegen notwendig sein, dass der Fahrer den Lastkraftwagen mehrfach rangieren muss, bevor das Fahrzeug zum Anhängefahrzeug oder zum zu entladenden Rollbehälter in der richtigen Position steht, der Haken des Ladegerätes den Aufnahmebügel des Rollbehälters sicher aufgenommen hat und der Rollbehälter in die Behältertransportposition auf den Lastkraftwagen gehoben und gezogen werden kann.

Der Prozess des Ausrichtens des Lastkraftwagens beim Aufsetzen des Rollbehälters von einem Lastkraftwagen auf ein zu beladendes Anhängefahrzeug verläuft grundsätzlich ähnlich. Auch hier ist der Lastkraftwagen mit dem Ladegerät relativ zum Anhängefahrzeug auszurichten, damit bei einem Verschieben des Rollbehälters auf den Anhänger die Rollen des Rollbehälters auf den Laufrollenbahnen oder auf einem Schlitten des Anhängefahrzeugs platziert werden und entlang der Anhängefahrzeuglängsrichtung in die Behältertransportposition bewegt werden können. Das Bewegen des Rollbehälters auf dem Anhängefahrzeug über eine Strecke von mehreren Metern, beispielsweisen sieben Metern, und die konstruktiven Bedingungen von Rollbehälter und Anhängefahrzeug, erfordern eine hohe Genauigkeit des Ausrichtens. Auch aus transportsicherheitstechnischer Sicht muss der Rollbehälter am Ende des Übersetzvorganges mit enger Tolerierung mittig zur Längsachse des zu beladenen Anhängefahrzeuges ausgerichtet sein.

Behälterentladeprozesse von Anhängefahrzeugen erfordern ein sorgfältiges Überführen des mit einem Ladegerät ausgestatteten Lastkraftwagens in die Behälterentladeposition relativ zum Anhängefahrzeug und/oder zum Rollbehälter auf diesem Anhängefahrzeug; Behälterbeladeprozesse erfordern wiederum ein sorgfältiges Überführen des Lastkraftwagens in eine Behälterbeladeposition relativ z.B. zu dem den Rollbehälter aufnehmenden Anhängefahrzeug.

Im Ergebnis ist es notwendig, dass der Lastkraftwagen zusätzlich zu einer geeigneten Relativposition auch einen geeigneten Relativwinkel zum zu beladenden Anhängefahrzeug und/oder zum von dem Anhängefahrzeug zu entladenden Rollbehälter einnimmt. Aufgrund der beschriebenen Beschaffenheit des Ladegeräts ist nur ein geringer Relativwinkel (bezogen auf die Längsachsen der Fahrzeuge) zwischen diesem und dem Rollbehälter zulässig, damit das Ladegerät in der Lage ist, den Rollbehälter erfolgreich überzusetzen. Größere Abweichungen würden dies verhindern.

Ziel der Erfindung ist es, Anhängefahrzeuge für den Transport von Transportbehältern zu schaffen, die ein Übersetzen von Rollbehältern durch ein Lastkraftwagen mit Ladegerät erleichtern.

Die vorstehende Aufgabe wird erfindungsgemäß durch ein Anhängefahrzeug zum Transport von Transportbehältern, also von Rollbehältern, Absetzbehältern, Absetzmulden oder dergleichen Behälter, mit einer Signalverarbeitungseinrichtung mit den Merkmalen nach Anspruch 1 gelöst.

Entsprechend ist ein Anhängefahrzeug zum Transport von Transportbehältern vorgesehen, das eine Transportfläche für den Transportbehälter aufweist. Insbesondere ist aber eine Signalverarbeitungseinrichtung vorgesehen, die zum Unterstützen oder Steuern des Behälterentladeprozesses und/oder des Behälterbeladeprozesses durch den Lastkraftwagen mit Ladegerät, z.B. einem Hakengerät, ausgebildet ist.

Erfindungsgemäß ist die Signalverarbeitungseinrichtung mit einem Sollsignalgeber, einem Sensor sowie mit einer Signalübertragungseinrichtung verbunden. Der Sensor ist dabei so ausgebildet und am Anhängefahrzeug angeordnet, dass dieser die Position eines sich annähernden Lastkraftwagens und/oder die Position des auf diesem aufgesetzten Transportbehälter relativ zu dem Anhängefahrzeug erfassen kann und, basierend auf der erfassten Messgröße, ein entsprechend auswertbares Sensorsignal generieren kann. Der mit der Signalverarbeitungseinrichtung verbundene Sollsignalgeber stellt hierbei eine Soll-Position des Transportbehälters und/oder des Lastkraftwagens relativ zum Anhängefahrzeug bereit. Die Soll-Position des Transportbehälters und/oder des Lastkraftwagens beschreibt dabei die Position, die der Transportbehälter und/oder das Lastkraftwagen im Sensorsignal annehmen muss, für ein erfolgreiches Übersetzen des Transportbehälters mittels des Ladegerätes vom Lastkraftwagen auf das Anhängefahrzeug und/oder für ein erfolgreiches Übersetzen des Transportbehälters vom Anhängefahrzeug auf den Lastkraftwagen.

Insbesondere ist vorgesehen, dass die Signalverarbeitungseinrichtung ausgebildet ist, aus dem Sensorsignal des Sensors eine Ist-Position des Transportbehälters und/oder des Lastkraftwagens relativ zum aufnehmenden oder zu entladenden Anhängefahrzeug zu bestimmen, und anschließend diese ermittelte Ist-Position des Transportbehälters und/oder des Lastkraftwagens mit einer Soll-Position des Transportbehälters und/oder des Lastkraftwagens, die bereitgestellt ist durch den Sollsignalgeber, zu vergleichen. Aus diesem Vergleich der Ist-Position mit der Soll-Position des Transportbehälters und/oder des Lastkraftwagens relativ zum Anhängefahrzeug bestimmt die Signalverarbeitungseinrichtung im Betrieb eine Differenz aus aktueller Position zu erforderlicher Position des Transportbehälters und/oder des Lastkraftwagens. Hierbei stellt die derart bestimmte Differenz eine Abweichung der Ist-Position von der Soll-Position des Transportbehälters und/oder des Lastkraftwagens relativ zum Anhängefahrzeug dar, die auf eine zulässige Größe minimiert werden muss, um ein Übersetzen des Transportbehälters von dem Anhängefahrzeug auf den Lastkraftwagen und/oder ein Übersetzen in umgekehrter Richtung mittels dessen Ladegeräts zu ermöglichen.

Vorzugsweise ist der Sensor so ausgebildet und am Anhängefahrzeug angeordnet, dass dieser die Position des Transportbehälters relativ zu dem Anhängefahrzeug nicht nur vor, sondern insbesondere auch während eines Übersetzens erfassen und ein auswertbares Sensorsignal generieren kann, das die jeweils aktuelle Ist-Position des Transportbehälters im Verlauf eines Übersetzvorgangs repräsentiert. Der Sollsignalgeber ist entsprechend vorzugsweise dazu ausgebildet, sich während des Verlaufs des Übersetzvorgangs ändernde Werte für eine Soll-Position des Transportbehälters derart zu liefern. Die jeweils von dem Sollsignalgeber gelieferten Werte für die Soll-Position des Transportbehälters repräsentieren Sollpositionen, die der Transportbehälter im jeweiligen Augenblick des Übersetzvorgangs einnehmen soll - also sich im Verlaufe des Übersetzvorgangs dynamisch anpassende Sollpositionen.

Die Signalverarbeitungseinrichtung ist außerdem ausgebildet, basierend auf dieser Abweichung zwischen der Ist-Position von der Soll-Position des Transportbehälters und/oder des Lastkraftwagens relativ zum Anhängefahrzeug, eine Führungsinformation zu bilden, die Steueranweisungen für Steuereingriffe an dem Lastkraftwagen enthält. Diese Steueranweisungen sind derart, dass deren Umsetzung ein Verringern der zuvor ermittelten Abweichung zwischen der Ist-Position von der Soll-Position des Transportbehälters und/oder des Lastkraftwagens relativ zum Anhängefahrzeug bewirkt. Die Steueranweisungen an das Lastkraftwagen sind hierbei so lange zu bilden, bis die durch die Signalverarbeitungseinrichtung ermittelte Ist-Position des Transportbehälters und/oder des Lastkraftwagens mit der durch den Sollsignalgeber bereitgestellten Soll-Position derart übereinstimmt, im Ergebnis also die Abweichung derart minimiert ist, dass der Transportbehälter vom Anhängefahrzeug auf den Lastkraftwagen erfolgreich übergesetzt und/oder der Transportbehälter vom Lastkraftwagen auf das Anhängefahrzeug übergesetzt werden kann und bis des Behälter die vorgesehene Endposition erreicht hat.

Die Signalverarbeitungseinrichtung ist außerdem vorzugsweise dazu ausgebildet, basierend auf einer Abweichung zwischen der Ist-Position von der Soll-Position des Transportbehälters und/oder des Lastkraftwagens relativ zum Anhängefahrzeug, ein Warnsignal auszulösen, falls die Abweichung zwischen der Ist-Position von der Soll-Position des Transportbehälters und/oder des Lastkraftwagens relativ zum Anhängefahrzeug größer als ein jeweiliger Grenzwert ist. Auf diese Weise ist es z.B. möglich, zu verhindern, dass ein Transportbehälter während des Übersetzvorgangs neben eine auf dem Lastkraftwagen oder Anhängefahrzeug vorgesehene Laufbahn gerät.

Die mit der Signalverarbeitungseinrichtung verbundene Signalübertragungseinrichtung ist des Weiteren ausgebildet, die durch die Signalverarbeitungseinrichtung gebildete Führungsinformation kontinuierlich und/oder in diskreten Zeitabständen an den Lastkraftwagen oder ein separates Anzeigegerät zu übertragen. Durch den Lastkraftwagen und/oder den Fahrer kann dann die Führungsinformation als Steueranweisung am Lastkraftwagen umgesetzt werden. Bei einem manuellen Umsetzen der Steueranweisung an den Lastkraftwagen und das Ladegerät durch den Fahrer, werden diesem die Steueranweisungen vorzugweise auf einer dafür ausgebildeten Anzeige angezeigt. Die Anzeige kann in den Lastkraftwagen eingebaut sein oder Teil eines separaten, vorzugsweise mobilen Anzeigegeräts sein.

Entsprechend wird erfindungsgemäß auch ein System vorgeschlagen, dass ein Anhängefahrzeug und ein Anzeigegerät umfasst, von denen das Anzeigegerät dazu konfiguriert ist, das Sensorsignal oder die Führungsinformation zu empfangen und zu verarbeiten und die Steueranweisungen für Steuereingriffe an dem Lastkraftwagen und/oder dem Ladegerät zur Anzeige zu bringen. Wenn das Anzeigegerät dazu konfiguriert ist, das Sensorsignal zu empfangen, enthält das Anzeigegerät vorzugsweise auch die Signalverarbeitungseinrichtung, die dazu ausgebildet ist basierend auf der Abweichung zwischen der Ist-Position von der Soll-Position des Transportbehälters und/oder des Lastkraftwagens relativ zum Anhängefahrzeug die Führungsinformation zu bilden.

Vorzugsweise kann die Signalverarbeitungseinrichtung mitsamt dessen Komponenten, also Sollsignalgeber, Sensor, Signalübertragungseinrichtung, am Anhängefahrzeug angeordnet sein. Dies schließt jedoch eine davon abweichende Anordnung nicht aus. Beispielsweise kann das Anhängefahrzeug nur den wenigstens einen Sensor und die Signalübertragungseinrichtung aufweisen. Die Signalverarbeitungseinrichtung mit dem Sollsignalgeber kann aber am Lastkraftwagen angeordnet und zum Empfangen des durch die Signalübertragungseinrichtung übertragenen Sensorsignals des wenigstens einen Sensors ausgebildet sein.

Gegenstand der Erfindung ist somit ein Transportbehälterübersetz-Assistenzsystem für ein Anhängefahrzeug, insbesondere für einen Anhänger, wobei das Assistenzsystem Behälterübersetzprozesse von einem und/oder auf ein Anhängefahrzeug durch einen Lastkraftwagen mit einem Ladegerät automatisieren oder unterstützen und so zumindest vereinfachen soll.

Die Erfindung schließt insbesondere die Erkenntnis ein, dass das erfindungsgemäße Anordnen des Sensors, beispielsweise ausgebildet als eine Kamera, am Anhängefahrzeug gegenüber einem Anordnen des Sensors am Lastkraftwagen stets ein unbeeinträchtigtes Erfassen der Position des Lastkraftwagens und/oder des auf dem Lastkraftwagen aufgesetzten Transportbehälters relativ zum Anhängefahrzeug ermöglicht. Ist der Sensor hingegen am Lastkraftwagen angeordnet, kann der Transportbehälter abhängig davon, ob sich dieser auf der Transportfläche des Lastkraftwagens befindet, auf ein Anhängefahrzeug übergeladen wird oder vom Anhänger auf ein Lastkraftwagen geladen wird, den Erfassungsbereich, also insbesondere das Bildfeld, des Sensors derart einschränken, dass die Funktion eines auf einer solchen Sensoranordnung basierenden Assistenzsystems zumindest vorübergehend beeinträchtigt ist. Dies ist insbesondere deshalb problematisch, weil z.B. ein fehlerhaftes Aufsetzen der Behälterrollen auf dem Anhängefahrzeug als Teil des Behälterübersetzprozesses eine Gefahr für umstehende Personen darstellen kann. Auch ein Anordnen des Sensors am Ladegerät des Lastkraftwagens kann dieser Problematik nur unzureichend entgegenwirken. In diesem Zusammenhang ist beispielsweise an einen Behälterübersetzvorgang zu denken, bei dem der Transportbehälter vom Lastkraftwagen auf das Anhängefahrzeug übergeladen werden soll. Abhängig von dem Behältertyp oder auch von der Art des Ladegeräts kann der auf der Transportfläche des Lastkraftwagens befindliche Transportbehälter das Bildfeld einer Kamera am Ladegerät zumindest teilweise verdecken. Insbesondere ist die für den Übersetzvorgang wichtige Relativposition zwischen den Rollen eines Abrollbehälters und dem Schienenbeginn der Laufrollenbahnen bzw. dem Schlitten auf dem Anhängefahrzeug aus Sicht des Lastkraftwagens häufig schwer oder gar nicht zu erkennen.

Assistenzsysteme für Lastkraftwagen sind grundsätzlich bekannt. So ist beispielsweise in EP 3 153 348 vorgeschlagen, den Fahrer eines Lastkraftwagens durch ein Fahrerassistenzsystem, ausgebildet als ein Wechsel-, Auflade- und/oder Ablade-Assistenzsystem, beim Wechseln, Aufladen und/oder Abladen eines Wechselbehälters von bzw. auf einen Lastkraftwagen zu unterstützen. Das Assistenzsystem nach EP 3 153 348 orientiert auf den Lastkraftwagen und dessen Behälteraufnahme und das Abstellen auf den Boden. Für das Übersetzen auf Anhänger bietet dieses System jedoch keine Lösung, da es hierbei auf die genaue Ausrichtung des Abrollbehälters zum Anhängefahrzeug, speziell zu dessen die Rollen aufnehmenden Teilen ankommt.

Ein Anhängefahrzeug für Transportbehälter kann gemäß einer Ausführungsvariante der Erfindung so ausgebildet sein, dass, sobald ein Fahrzeugführer eines Lastkraftwagens dieses mit der Transportfläche ungefähr zum Anhängefahrzeug ausgerichtet hat, beispielsweise eine Kamera am Anhängefahrzeug das Bildfeld in Richtung des Lastkraftwagens aufzeichnet, und somit also auch die Position des aufnehmenden oder übersetzenden Lastkraftwagens relativ zum Anhängefahrzeug erfasst. Die Signalverarbeitungseinrichtung ermittelt dann aus dem vorzugsweise kontinuierlich aufgezeichneten Kamerabild kontinuierlich oder in diskreten Zeitabständen die Ist-Position des Lastkraftwagens oder des Transportbehälters darauf relativ zum Anhängefahrzeug und vergleicht diese mit einer durch den Sollsignalgeber bereitgestellten Soll-Position. Der Sollsignalgeber kann beispielsweise als ein Speicher ausgebildet sein, in dem die Soll-Positionen des Transportbehälters und/oder des Lastkraftwagens hinterlegt sind. Die Soll-Position des Lastkraftwagens oder des Transportbehälters auf diesem ist hierbei als die Position vorgegeben, die das Lastkraftwagen oder der Transportbehälter im aufgezeichneten Kamerabild einnehmen muss, damit der tatsächliche Transportbehälter - also beispielsweise der Rollbehälter - durch das Ladegerät des Lastkraftwagens auf das Anhängefahrzeug übergesetzt werden kann oder vom Anhängefahrzeug auf den Lastkraftwagen gehoben und gezogen werden kann. In einer weiteren Ausführungsvariante kann der Sollsignalgeber alternativ oder auch zusätzlich als wenigstens ein weiterer Sensor ausgebildet sein, der die Soll-Position des Transportbehälters und/oder des Lastkraftwagens relativ zum Anhängefahrzeug, beispielsweise relativ zu der aktuellen Lage des Transportschlittens auf dem Anhänger oder unter Einbeziehung einer unebenen Aufstandsfläche bereitstellt. In diesem Fall kann die Signalverarbeitungseinrichtung, die dann ebenfalls mit dem weiteren Sensor verbunden ist, weiter ausgebildet sein, die Soll-Position dynamisch aus einem Sensorsignal des weiteren Sensors zu bestimmen.

Die Signalverarbeitungseinrichtung ist ausgebildet, in der Folge eine Abweichung der Ist-Position von der Soll-Position zu ermitteln. Ausgehend von der so bestimmten Abweichung bildet die verwendete Signalverarbeitungseinrichtung eine Führungsinformation für den Lastkraftwagen, das heißt, die Signalverarbeitungseinrichtung bildet Steueranweisungen für Steuereingriffe an dem Lastkraftwagen. Hierbei kann die Signalverarbeitungseinrichtung so ausgebildet sein, dass sie die Führungsinformation als eine optimale Soll-Trajektorie für den Lastkraftwagen bildet, das heißt, eine Trajektorie bildet, entlang derer der Lastkraftwagen mittels geeigneter Steueranweisungen zu führen ist, um die Abweichung zwischen der Ist-Position von der Soll-Position des Lastkraftwagens relativ zum Anhängefahrzeug und/oder zum Transportbehälter zu minimieren, und den Lastkraftwagen somit in eine Behälterübersetzposition zu überführen. Alternativ oder zusätzlich kann die Führungsinformation als ein optimaler Soll-Korridor für den Lastkraftwagen gebildet sein, das heißt, als ein Soll-Korridor innerhalb dessen der Lastkraftwagen mittels geeigneter Steueranweisungen zu führen ist. Die Signalübertragungseinrichtung ist zudem ausgebildet, die durch die Signalverarbeitungseinrichtung gebildete Führungsinformation in der Folge kontinuierlich vom Anhängefahrzeug zu einem Anzeigegerät und/oder an den Lastkraftwagen zu übertragen. Die Steueranweisungen an den Lastkraftwagen betreffen beispielsweise eine Lenkbewegung, eine Beschleunigung und eine Verzögerung des Lastkraftwagens sowie eine Auswahl zwischen Vorwärtsfahrt und Rückwärtsfahrt.

Auf diese Weise kann die Qualität von Behälteraufsetzprozessen und Behälterübersetzprozessen erhöht werden. Beispielsweise kann die Dauer, die solche Prozesse in Anspruch nehmen, reduziert und die Präzision solcher Prozesse erhöht werden. Überdies hängen der Behälteraufsetzprozess und der Behälterübersetzprozess bei einem Anhängefahrzeug der erfindungsgemäßen Art nicht ausschließlich von der Geschicklichkeit und den Erfahrungen des Fahrers des Lastkraftwagens ab.

Die Steueranweisungen an den Lastkraftwagen können zusätzlich auch dessen Ladegerät, also z.B. dessen Hakengerät, betreffen. Hierunter ist ein Verfahren des Ladegeräts von der Behältertransportstellung in die Behälterübersetzstellung und umgekehrt zu verstehen, um z.B. bei der Beladung des Anhängefahrzeugs die gewünschte Annäherungsposition zu erreichen oder bei der Anhängerentladung den Haken des Ladegeräts mit dem Aufnahmebügel am Rollbehälter in Eingriff zu bringen.

Gemäß einem weiteren Aspekt der Erfindung kann das Überführen des Lastkraftwagens in eine Behälterübersetzposition manuell durch den Fahrzeugführer oder selbsttätig - also automatisch - erfolgen, indem die durch die Signalverarbeitungseinrichtung ermittelten Steueranweisungen in entsprechende Steuereingriffe an dem Lastkraftwagen umgesetzt werden.

Hierbei kann es zunächst vorgesehen sein, dass die durch die Signalverarbeitungseinrichtung am Anhängefahrzeug ermittelten Steueranweisungen für den Lastkraftwagen mit Hilfe einer Signalübertragungseinrichtung, an den Lastkraftwagen direkt oder indirekt übertragen und von diesem empfangen werden. Alternativ kann aber auch vorgesehen sein, dass nur der wenigstens eine Sensor und die Signalübertragungseinrichtung am Anhängefahrzeug angeordnet sind. In diesem Fall überträgt die Signalübertragungseinrichtung nurdas Sensorsignal an die Signalverarbeitungseinrichtung, die dann am Lastkraftwagen angeordnet ist oder an eine weitere am Lastkraftwagen angeordnete und mit der Signalverarbeitungseinrichtung verbundene Signalübertragungseinrichtung. Gegebenenfalls kann auch der Sollsignalgeber z.B. als Speicher am Lastkraftwagen oder einem dort befindlichen System angeordnet sein.

Für ein selbsttätiges Überführen des Lastkraftwagens in die Behälterübersetzposition kann der Lastkraftwagen eine dedizierte Steuerung aufweisen, die einen Eingang zum Empfangen der an den Lastkraftwagen übertragenen Steueranweisungen aufweist und ausgebildet ist, aus den Steueranweisungen Steuersignale für Aktuatoren des Lastkraftwagens zu bilden und diese an die Aktuatoren des Lastkraftwagens auszugeben. Ein entsprechender Aktuator kann beispielsweise eine Servolenkung des Lastkraftwagens sein, der zum selbsttätigen Umsetzen der Steueranweisungen in Lenkbewegungen an dem Lastkraftwagen ausgebildet ist. Im Betrieb des Lastkraftwagens werden bei einem selbsttätigen Überführen des Lastkraftwagens in die Behälterübersetzposition die vom Anhängefahrzeug an den Lastkraftwagen übertragenen Steueranweisungen zunächst an den Eingang der dedizierten Steuerung geleitet. Die dedizierte Steuerung bildet dann aus den Steueranweisungen Steuersignale für die entsprechenden Aktuatoren des Lastkraftwagens und gibt die Steuersignale an diese aus. Die Steuersignale veranlassen dann wiederum die Aktuatoren die Steueranweisungen in Steuereingriffe, also das Lenken, Beschleunigen, Verzögen und Auswählen der Fahrtrichtung des Lastkraftwagens-umzusetzen. Auf gleiche Weise kann auch das Hakengerät gesteuert werden.

Für ein manuelles Überführen des Lastkraftwagens in die Behälteraufsetzposition oder in die Behälterübersetzposition kann eine graphische und/oder bildliche Anzeige für den Fahrzeugführer vorgesehen sein. Die Anzeige ist vorzugsweise ausgebildet, dem Fahrzeugführer die Abweichung zwischen der ermittelten Ist-Position und der bereitgestellten und/oder hinterlegten Soll-Position des Lastkraftwagens oder des Transportbehälters relativ zum Anhängefahrzeug und dessen Transportfläche zur Anzeige zu bringen, auch in Kombination mit einem kontinuierlich aufgezeichneten Kamerabild. Um dem Fahrzeugführer das Überführen des Lastkraftwagens in die Behälteraufsetzposition oder Behälterübersetzposition weiter zu erleichtern, kann die Signalverarbeitungseinrichtung in Verbindung mit der graphischen und/oder bildlichen Anzeige dazu ausgebildet sein, die Ist-Position und die Soll-Position beispielsweise als farbcodierte Markierungen dem aufgezeichneten Kamerabild zu überlagern und/oder die aus der Führungsinformation bestimmten Steueranweisungen für den Lastkraftwagen ebenfalls auf der graphischen Anzeige darzustellen. Die Steueranweisungen für den Lastkraftwagen können auf der graphischen Anzeige beispielsweise in Textform, alternativ oder zusätzlich aber auch über Symbole dargestellt werden. Die Signalverarbeitungseinrichtung kann zudem mit einem akustischen Signalgeber verbunden und ausgebildet sein, akustische Signale in Abhängigkeit von den Steueranweisungen für den Lastkraftwagen zu generieren und diese über den akustischen Signalgeber an den Fahrzeugführer auszugeben.

Überdies kann die Signalverarbeitungseinrichtung in Verbindung mit der graphischen und/oder bildlichen Anzeige dazu ausgebildet sein, aus dem Sensorsignal, das heißt, insbesondere aus dem Kamerabild, durch die Signalverarbeitungseinrichtung eine abstrahierte Draufsicht auf den Lastkraftwagen und/oder den Transportbehälter zu generieren und relativ zu dieser Draufsicht, die Position des Anhängefahrzeugs gemeinsam in einer Ansicht auf der Anzeige darzustellen. Die Signalverarbeitungseinrichtung kann in Verbindung mit der graphischen Anzeige zudem ausgebildet sein, in dieser Draufsicht zusätzlich die durch die Signalverarbeitungseinrichtung ermittelte optimale Soll-Trajektorie und/oder den optimalen Soll-Korridor für den Lastkraftwagen anzuzeigen. Im Betrieb des Lastkraftwagens wird es dem Fahrzeugführer somit auf besonders einfache Weise ermöglicht, den Lastkraftwagen in die Behälterübersetzposition zu überführen.

Zusätzlich oder optional kann die Signalverarbeitungseinrichtung ausgebildet sein, aus dem Sensorsignal-für Behälterübersetzprozesse relevante Informationen zu ermitteln. Dies kann beispielsweise ein Abstand zwischen Lastkraftwagen und Anhängefahrzeug und/oder ein Versatz oder Winkel zwischen einer von der Signalverarbeitungseinrichtung bestimmten Lastkraftwagenlängsachse und einer Anhängefahrzeuglängsachse sein. Überdies kann die Signalverarbeitungseinrichtung ausgebildet sein, in dem Sensorsignal während eines Behälterübersetzvorgangs Personen und/oder Hindernisse, insbesondere zwischen dem Lastkraftwagen und dem Anhängefahrzeug bzw. in einem Gefahrenbereich zu ermitteln. Weiter kann die Signalverarbeitungseinrichtung in Verbindung mit der graphischen und/oder bildlichen Anzeige und/oder dem akustischen Signalgeber ausgebildet sein, diese Information dem Fahrzeugführer anzuzeigen. Lastkraftwagen und/oder Ladegeräte mit automatischer Steuerung können gleichfalls bei Gefahren z.B. mit einem Not-Stopp reagieren. Im Betrieb des Lastkraftwagens kann dem Fahrzeugführer somit auf der Anzeige und/oder über den akustischen Signalgeber angezeigt werden, ob sich während des Behälterübersetzvorgangs beispielsweise Personen zwischen dem Lastkraftwagen und dem Anhängefahrzeug befinden und/oder wie sich der Abstand und/oder der Versatz oder Winkel zwischen Lastkraftwagen und Anhängefahrzeug infolge der Steuereingriffe an dem Lastkraftwagen verändert.

Überdies kann vorgesehen sein, dass die Signalübertragungseinrichtung, angeordnet am Anhängefahrzeug und/oder am Lastkraftwagen, für eine bidirektionale Signalübertragung ausgeführt ist. Das heißt, dass die Signalübertragungseinrichtung sowohl die Führungsinformation oder das Sensorsignal des wenigstens einen Sensors vom Anhängefahrzeug an den Lastkraftwagen übertragen als auch Signale vom Lastkraftwagen an das Anhängefahrzeug übertragen kann. Diese an das Anhängefahrzeug zu übertragenden Signale können sich beispielswiese auf eine Freigabe und/oder eine Verriegelung eines Ladungssicherungssystems für den Transportbehälter auf dem Anhängefahrzeug vor bzw. nach dem Behälterübersetzvorgang beziehen. In diesem Zusammenhang kann die Anzeige als ein berührungsempfindliches Display ausgebildet sein, über welches der Fahrzeugführer mittels entsprechender Eingaben Signale an das Anhängefahrzeug eingeben und deren Übertragung auslösen kann. Zusätzlich oder alternativ kann auch eine Sprachsteuerung vorgesehen sein.

Die Erfindung schließt zudem die Erkenntnis mit ein, dass durch einen Lastkraftwagen in der Regel unterschiedliche Transportbehältertypen - insbesondere Rollbehälter und Absetzbehälter - und/oder unterschiedliche Transportbehältergrößen vom Anhängefahrzeug aufzunehmen oder auf dieses zu platzieren sind. Zusätzlich oder optional kann es daher vorgesehen sein, dass für unterschiedliche Transportbehälter bei den Behälterübersetzprozessen unterschiedliche Soll-Positionen des Transportbehälters und/oder des diesen tragenden Lastkraftwagens relativ zum Anhängefahrzeug bestimmt und diese durch den Sollsignalgeber bereitgestellt sind, also beispielsweise in einem Speicher der Signalverarbeitungseinrichtung gespeichert sind. Dies gilt analog für verschiedene Lastkraftwagentypen und Ausführungen, wobei für Behälterübersetzprozesse die jeweiligen Soll-Positionen des Lastkraftwagens relativ zum Anhängefahrzeug im Speicher gespeichert sind. Analog dazu können auch die Eigenschaften unterschiedlicher Ladegeräte bereitgestellt werden.

Für ein Übersetzen insbesondere eines Rollbehälters vom Lastkraftwagen auf ein Anhängefahrzeug mit einem Schlitten, über den der darauf zu platzierende Rollbehälter in einer Anhängefahrzeuglängsrichtung mittels des Ladegerätes des Lastkraftwagens in die Behältertransportposition auf dem Anhängefahrzeug bewegt wird, umfasst die Soll-Position des Lastkraftwagens und/oder des Rollbehälters auf dem Lastkraftwagen relativ zum Anhängefahrzeug überdies eine entsprechende Aufsetzposition der Rollen des Rollbehälters. Das heißt, im Betrieb des Lastkraftwagens ist der Lastkraftwagen relativ zum Anhängefahrzeug in der Soll-Position so zu positionieren, dass beim Übersetzen des Rollbehälters auf das Anhängefahrzeug die Rollen des Rollbehälters in entsprechende Mulden des Schlittens des Anhängefahrzeugs oder auf den die Laufrollenbahnen bildende Schienen auf dem Anhängefahrzeug bewegt und/oder aufgesetzt werden. Im weiteren Verlauf des Übersetzvorgangs bewegt sich der Rollbehälter dann auf dem Schlitten oder auf den Laufrollenbahnen entlang der Anhängefahrzeuglängsachse bis in die Behältertransportposition auf dem Anhängefahrzeug, die ebenfalls, abhängig von der Behälterlänge, beispielsweise im Speicher der Signalverarbeitungseinrichtung gespeichert sein kann.

Bei einem Behälterübersetzprozess mittels eines Lastkraftwagens mit Ladegerät kann die Soll-Position überdies einen zulässigen Soll-Relativbereich zwischen einem Transportbehälter und/oder Lastkraftwagen und einem Anhängefahrzeug repräsentieren. Dieser zulässige Soll-Relativbereich wird dabei durch einen zulässigen Soll-Relativpositionsbereich und/oder durch einen zulässigen Soll-Relativwinkelbereich gebildet. Im Betrieb des Lastkraftwagens, das heißt, im Ergebnis eines Annäherns des Lastkraftwagens an das Anhängefahrzeug, ist der Transportbehälter und/oder das Lastkraftwagen relativ zum Anhängefahrzeug in diesem zulässigen Soll-Relativbereich anzuordnen, um ein erfolgreiches Übersetzen des Transportbehälters zu ermöglichen.

Der Soll-Relativpositionsbereich ist ein zulässiger axialer Abstandsbereich zwischen der dem Anhängefahrzeug und/oder dem Transportbehälter auf dem Anhängefahrzeug zugewandten Seite des Lastkraftwagens und der dem Lastkraftwagen und/oder dem Transportbehälter auf dem Lastkraftwagen zugewandten Seite des Anhängefahrzeugs in dem ein erfolgreiches Aufnehmen und/oder Übersetzen eines Transportbehälters möglich ist. Maßgebend ist darüber hinaus auch der seitliche Abstand der Mittelebenen von Anhängefahrzeug und Lastkraftwagen, d.h. deren Versatz. Der Soll-Relativwinkelbereich ist ein zulässiger Winkelbereich zwischen einer Längsachse des Lastkraftwagens und/oder des Transportbehälters auf dem Lastkraftwagen und einer Längsachse des Anhängefahrzeugs und/oder des Transportbehälters auf dem Anhängefahrzeug in dem ein erfolgreiches Übersetzen eines Transportbehälters möglich ist. Für den Vergleich mit dem Soll-Relativwinkelbereich kann der aktuelle Istwert des Winkels des Rollbehälters oder des Lastkraftwagens relativ zum Anhängefahrzeug beispielweise aus Abstandsmessungen der Ist-Positionen des Transportbehälters bzw. des Lastkraftwagens an unterschiedlichen Stellen ermittelt werden.

Der wenigstens eine Sensor kann zudem derart am Anhängefahrzeug angeordnet und ausgebildet sein, dass dieser die Position des Transportbehälters und/oder dessen Bewegungsbahn relativ zu der Transportfläche des Lastkraftwagens während eines Übersetzens eines Transportbehälters von einem Lastkraftwagen auf ein Anhängefahrzeug und/oder vom Anhängefahrzeug auf den Lastkraftwagen erfasst.

Die Signalverarbeitungseinrichtung ist vorzugsweise ausgebildet, eine Ist-Position des Transportbehälters relativ zu der Transportfläche aus dem Sensorsignal des wenigstens einen Sensors zu bestimmen und mit der vom Sollsignalgeber bereitgestellten Soll-Position des Transportbehälters relativ zu der Transportfläche zu vergleichen und basierend auf diesem Vergleich eine Führungsinformation für den Lastkraftwagen und/oder das Ladegerät zu bilden.

Alternativ oder zusätzlich kann die Signalverarbeitungseinrichtung zum Auslösen des Übertragens eines Signals mittels der Signalübertragungseinrichtung ausgebildet sein, wenn sich der Transportbehälter den Grenzen des Sollrelativbereiches bei der Bewegung relativ zur Transportfläche annähert oder/und beim Erreichen einer Soll-Position des Transportbehälters relativ zu der Transportfläche, vorzugsweise der Behältertransportposition (BTP). Das Übertragen des Signals (S) kann an den Lastkraftwagen, an das Ladegerät und/oder eine beispielsweise mobile Anzeige für den Fahrer gerichtet sein. Die Anzeige des Signals kann bildlich, graphisch oder beispielsweise akustisch und als Kombination dieser Ausführungen erfolgen.

Die Signalverarbeitungseinrichtung kann in diesem Zusammenhang weiter ausgebildet sein, aus der durch den wenigstens einen Sensor erfassten Position die Ist-Position des Transportbehälters relativ zu der Transportfläche zu bestimmen und bei einem Erreichen einer vorgesehenen Soll-Position, also insbesondere einer Behältertransportposition, des Transportbehälters auf der Transportfläche des Anhängefahrzeugs, ein entsprechendes Signal zu generieren. Des Weiteren kann die Signalübertragungseinrichtung ausgebildet sein, in Abhängigkeit einer Anordnung der Komponenten der Signalverarbeitungseinrichtung, dieses Signal zunächst an den Lastkraftwagen mittels der Signalübertragungseinrichtung zu übertragen und das Signal an eine graphische und/oder bildliche Anzeige zu leiten und dieses auf der Anzeige darzustellen und/oder ein Erreichen der Behältertransportposition auf andere Weise, beispielsweise akustisch, zu signalisieren. Im Betrieb des Lastkraftwagens erkennt der Fahrzeugführer somit direkt, also ohne aus dem Lastkraftwagen aussteigen zu müssen, wenn sich der Behälter beim Übersetzen auf dem Anhängefahrzeug in einer kritischen Position befindet oder ob der Behälterübersetzvorgang abgeschlossen ist.

Überdies kann die Signalverarbeitungseinrichtung ausgebildet sein, eine Gewichtsverteilung eines Transportbehälters auf der Transportfläche des Anhängefahrzeugs zu bestimmen. Dies kann beispielsweise ausgehend von einem Signal wenigstens eines bereits am Anhängefahrzeug vorhandenen Reifendrucksensors und/oder eines Luftfederdrucksensors und/oder einer Fahrzeugelektronik wie beispielsweise einer Bremse und/oder eines Stabilitätssystems des Anhängefahrzeugs erfolgen. Die Signalverarbeitungseinrichtung kann weiter ausgebildet sein, aus der kontinuierlich oder in diskreten Zeitabständen ermittelten Gewichtsverteilung des Transportbehälters und/oder dessen Ist-Position auf der Transportfläche eine Positionierungsinformation für den Transportbehälter zu bilden. Diese Positionierungsinformation enthält dabei Steueranweisungen für ein Ladegerät eines Lastkraftwagens und/oder für den Lastkraftwagen, um mittels des Ladegeräts und/oder Rangieren des Lastkraftwagens den Transportbehälter derart auf der Transportfläche des Anhängefahrzeugs zu positionieren, dass die Achsen des Anhängefahrzeugs im vorgesehenen bzw. zulässigen Verhältnis mit der Gewichtskraft des Transportbehälters belastet werden. Hierdurch werden der Vorteil einer guten Auslastung der Fahrzeugnutzmasse und einer hohen Fahrstabilität im Betrieb erzielt.

Ist vorgesehen, dass der wenigstens eine Sensor am Anhängefahrzeug angeordnet und ausgebildet ist, sowohl den Behälterübersetzvorgang und auch das Positionieren des Behälters auf der Transportfläche des Anhängefahrzeugs zu erfassen, kann der wenigstens eine Sensor auch als ein Sensorsystem mit wenigstens zwei Sensoren ausgeführt sein. Hierbei kann ein erster Sensor den Behälteraufsetzvorgang und/oder den Behälterübersetzvorgang erfassen. Da der erste Sensor ein freies Bildfeld auf ein sich annäherndes Lastkraftwagen erfordert, kann der erste Sensor - abhängig von der vorgesehenen Be- und Entladeseite des Anhängefahrzeugs - an der Stirnseite oder am Heck des Anhängefahrzeugs angeordnet sein. Ein weiterer, zweiter Sensor, angeordnet an dem der Be- und Entladeseite des Anhängefahrzeugs gegenüberliegenden Ende des Anhängefahrzeugs, kann dann ein Positionieren des Behälters auf der Transportfläche des Anhängefahrzeugs erfassen.

Des Weiteren kann bezüglich des wenigstens einen Sensors der den Behälterübersetzvorgang erfasst, also insbesondere bezüglich einer wenigstens einen Kamera, vorgesehen sein, dass diese als ein Stereosystem mit zwei Kameras ausgeführt ist. Erfassen die beiden Kameras aus jeweils unterschiedlicher Perspektive ein gemeinsames Bildfeld, welches den Lastkraftwagen enthält, so kann beispielsweise mittels einer Stereotriangulation der beiden Perspektiven des gemeinsamen Bildfeldes durch zum Beispiel die Signalverarbeitungseinrichtung eine Tiefeninformation aus den aufgezeichneten Kamerabildern rekonstruiert werden. Das heißt, ein Stereosystem ist dazu geeignet, ausgehend von der rekonstruierten Tiefeninformation, die Raumposition des Lastkraftwagens und/oder die Raumposition des Transportbehälters auf dem Lastkraftwagen relativ zum Anhängefahrzeug zu bestimmen. Ein Einbeziehen der Rauminformation bezüglich der Position des Lastkraftwagens und/oder des Transportbehälters relativ zum Anhängefahrzeug beim Bilden der Führungsinformation für den Lastkraftwagen erhöht die Präzision des Übersetzvorganges. Andere Erfassungssensoren können in gleicher Weise als Stereosystem eingesetzt werden. Bei der Verwendung eines Sensorsystems mit wenigstens einem weiteren zweiten Sensor, der das Positionieren des Behälters auf der Transportfläche des Anhängefahrzeugs erfasst, kann zusätzlich oder alternativ kann vorgesehen sein, dass dieser auch ein Stereosystem oder nach dem Prinzip einer time-of-flight-Kamera ausgebildet ist.

Alternativ zu dem oben beschriebenen Stereosystem kann der wenigstens eine Sensor, der den Behälterübersetzvorgang erfasst, als eine sogenannte "time-of-flight"-Kamera ausgebildet sein. Eine Kamera dieses Typs misst mittels eines Laufzeitverfahrens, also mittels eines Verfahrens zur indirekten Entfernungsmessung durch Messung jener Zeit, die ein Signal für das Durchlaufen einer Messstrecke benötigt, die Distanz zu einem Objekt im erfassten Bildfeld der Kamera. Beispielsweise kann das Bildfeld mittels eines Infrarotlichtpulses ausgeleuchtet werden. Die Kamera misst für jeden Bildpunkt die Zeit, die der Infrarotlichtpuls bis zum Objekt und wieder zurück braucht. Die benötigte Zeit ist dann direkt proportional zur Distanz. Die Kamera liefert somit für jeden Bildpunkt die Entfernung des darauf abgebildeten Objektpunkts - also ein dreidimensionales (3D) Bild. Konkret bedeutet dies, dass alternativ auch über diesen Kameratyp eine Tiefeninformation bezüglich eines Objekts im Bildfeld durch beispielsweise die Signalverarbeitungseinrichtung rekonstruiert werden kann. Die Signalverarbeitungseinrichtung kann in diesem Zusammenhang ausgebildet sein, aus der Tiefeninformation die Raumposition zum Beispiel des Transportbehälters und/oder des Lastkraftwagens relativ zum Anhängefahrzeug zu bestimmen. Im Gegensatz zu einem Stereosystem kann dies mit einer einzigen time-of-flight-Kamera geschehen. Laser-Sensoren können ebenfalls nach dem Prinzip des Abtastens dreidimensionale Bilder erzeugen.

Bei der Verwendung eines Sensorsystems mit wenigstens einem weiteren zweiten Sensor, der das Positionieren des Behälters auf der Transportfläche des Anhängefahrzeugs erfasst, kann zusätzlich oder alternativ vorgesehen sein, dass dieser auch als ein Stereosystem oder nach dem Prinzip einer time-of-flight-Kamera ausgebildet ist.

Eine solche Vorrichtung eignet sich überdies insbesondere für eine Lageüberwachung des Transportbehälters auf der Transportfläche des Anhängefahrzeugs während der Fahrt. Verrutscht der Transportbehälter beispielsweise auf der Transportfläche, so kann die Signalverarbeitungseinrichtung ausgebildet sein, dies im Sensorsignal z.B. eines Abstandsmesssystems, insbesondere im Bild des Stereosystems bzw. des Systems der time-of-flight-Kamera, zu erkennen, ein entsprechendes Signal zu generieren und dieses an die graphische und/oder bildliche Anzeige zu leiten, alternativ oder zusätzlich auch akustisch anzuzeigen. Die Anzeige kann in diesen Zusammenhang ausgebildet sein, dieses Signal dem Fahrzeugführer zur Anzeige zu bringen. Alternativ kann auch vorgesehen sein, die Behälterposition auf dem Anhängefahrzeug während des Transports beispielsweise durch eine Anzahl an kontaktbasierten und/oder kontaktlosen Abstandssensoren zu überwachen.

Um bei einer kamerabasierten Positionsbestimmung des Lastkraftwagens und/oder des Transportbehälters auf dem Lastkraftwagen relativ zum Anhängefahrzeugs und der Positionsbestimmung des Transportbehälters auf der Transportfläche des Anhängefahrzeugs die Präzision und die Zuverlässigkeit zu erhöhen, können an dem Lastkraftwagen, dessen Ladegerät, am Transportbehälter, dem Anhängefahrzeug und/oder dessen Transportfläche dauerhaft und/oder temporär Referenzmarkierungen, vorgesehen sein. Die Referenzmarkierungen können eine bestimmte, durch eine Bildverarbeitung in der Signalverarbeitungseinrichtung einfach zu erkennende Geometrie aufweisen. Geeignet sind insbesondere Dreiecke, Quadrate oder dergleichen Geometrien. Überdies liefern insbesondere Dreiecke oder ähnliche Geometrien aufgrund möglicher perspektivischer Verzerrungen ihrer Abbildungen im Kamerasignal zusätzliche Informationen bezüglich der Ausrichtung des Lastkraftwagens und/oder des Transportbehälters relativ zum Anhängefahrzeug. Das heißt, im Betrieb des Lastkraftwagens wird, abhängig von der Position der Referenzmarkierung und einer Bewegung zwischen Lastkraftwagen und Anhängefahrzeug, die Abbildung der entsprechenden Geometrie der Referenzmarkierung im Kamerasignal in einem vorbestimmbaren Maß verzerrt oder entzerrt. Die Signalverarbeitungseinrichtung kann ausgebildet sein, dies beim Bilden der Führungsinformation für den Lastkraftwagen zu berücksichtigen, um die Präzision beim Bilden der Steueranweisungen für Steuereingriffe am Lastkraftwagen zu erhöhen.

Überdies kann zusätzlich oder alternativ vorgesehen sein, dass die Signalverarbeitungseinrichtung ausgebildet ist, bei einer kamerabasierten Positionsbestimmung des Lastkraftwagens und/oder des Transportbehälters auf dem Lastkraftwagen relativ zum Anhängefahrzeugs und/oder der Positionsbestimmung des Transportbehälters auf der Transportfläche des Anhängefahrzeugs, im Sensorsignal des wenigstens einen Sensors wenigstens eine Komponente und/oder eine Kontur und/oder einen Teil einer Kontur des Transportbehälters und/oder des Lastkraftwagens darüber hinaus auch Teile des Anhängefahrzeugs, diese gegebenenfalls auch mit dem Sensor Sollwertgebers, selbsttätig zu erkennen. Im Betrieb des Lastkraftwagens kann der wenigstens eine Sensor in Verbindung mit der Signalverarbeitungseinrichtung beim Behälterübersetzvorgang insbesondere die Rollen des überzusetzenden Rollbehälters und/oder dessen Kontur erfassen und erkennen. Bei einem Übersetzen des Rollbehälters vom Lastkraftwagen auf ein Anhängefahrzeug kann der wenigstens eine Sensor in Verbindung mit der Signalverarbeitungseinrichtung somit erfassen und erkennen, ob und dass die Rollen des Rollbehälters tatsächlich in die entsprechenden Mulden des Schlittens des Anhängefahrzeugs befinden oder wie sie auf den Laufrollenbahnen bewegt werden.

Um ein derartiges selbststätiges Erkennen von beispielsweise Rollen eines Abrollbehälters und/oder von deren Kontur zu verwirklichen, können der Sensor oder die Signalverarbeitungseinrichtung ein entsprechend trainiertes neuronales Netz, insbesondere eine convolutional neural network aufweisen.

Alternativ kann vorgesehen sein, dass die Positionsbestimmung des Lastkraftwagens und/oder des Transportbehälters auf dem Lastkraftwagen relativ zum Anhängefahrzeugs und/oder der Positionsbestimmung des Transportbehälters auf der Transportfläche des Anhängefahrzeugs durch laserbasierte und/oder radarbasierte Sensoren erfolgt. Die Signalverarbeitungseinrichtung ist dann ausgebildet, wenigstens eine Komponente und/oder eine Kontur und/oder einen Teil einer Kontur des Transportbehälters und/oder des Lastkraftwagens und/oder des Anhängefahrzeugs oder auch die gesamte Struktur des Transportbehälters und/oder des Lastkraftwagens und/oder des Anhängefahrzeugs oder sogar alle Komponenten unter Einbeziehung der Umgebung im Sensorsignal eines solchen Sensors selbsttätig zu erkennen.

Die Erfindung schließt zudem die Erkenntnis ein, dass optional eine Anzahl an Positioniermitteln am Lastkraftwagen und/oder am aufgesetzten Transportbehälter zum Unterstützen der Bestimmung der Ist-Position des Lastkraftwagens und/oder des Transportbehälters relativ zum Anhängefahrzeug durch die Signalverarbeitungseinrichtung angeordnet sein kann. Sobald ein Signal der Anzahl an Positioniermittel in empfangen wird kann die Signalverarbeitungseinrichtung ausgebildet sein, Signale der Positioniermittel beim Bilden der Steueranweisungen für Steuereingriffe am Lastkraftwagen mit einzubeziehen, um den Lastkraftwagen relativ zum Anhängefahrzeug genau auszurichten, ebenso die Bewegung des Behälters auf dem Anhängefahrzeug zu kontrollieren.

Die Positioniermittel können hierbei beispielsweise als aktive RFID-Transponder oder aber auch als aktive Ultraschall-Transponder ausgebildet sein. In diesem Zusammenhang kann die Signalverarbeitungseinrichtung ausgebildet sein, ein entsprechendes Signal an passive RFID- oder Ultraschall-Transponder zu veranlassen und das von den passiven Transpondern in Reaktion gesendete Signal zu verarbeiten, um dieses zusätzlich beim Bilden der Steueranweisungen für Steuereingriffe am Lastkraftwagen und/ oder am Ladegerät mit einzubeziehen und somit die Präzision des Übersetzvorganges zu erhöhen.

Als Alternative zu den oben beschriebenen optischen Sensoren kann der wenigstens eine Sensor zur Positionsbestimmung des Lastkraftwagens und/oder des Transportbehälters auf dem Lastkraftwagen relativ zum Anhängefahrzeugs und/oder zur Positionsbestimmung des Transportbehälters auf der Transportfläche des Anhängefahrzeugs als ein Sensor zum Erfassen einer Laufzeit eines Signals zwischen Lastkraftwagen und/oder Transportbehälter und/oder Anhängefahrzeug ausgebildet sein. In dieser Variante kann beispielsweise ein Ultraschallsensor oder eine Anordnung einer Anzahl an Ultraschallsensoren zur Entfernungsmessung vorgesehen sein. Die Signalverarbeitungseinrichtung kann in diesem Zusammenhang ausgebildet sein, aus der Signallaufzeit die Ist-Position des Lastkraftwagens und/oder des Transportbehälters relativ zum Anhängefahrzeug zu bestimmen. Auch können, dauerhaft oder temporär eine Anzahl an Positioniermitteln, beispielsweise in der Form von Ultraschall-Transpondern, am Lastkraftwagen und/oder am Transportbehälter vorgesehen sein, um die Genauigkeit der Abstandsmessung mittels des wenigstens einen Ultraschallsensors zu erhöhen. Überdies kann auch die Positionsbestimmung des Transportbehälters speziell zur Transportfläche des Anhängefahrzeugs mittels wenigstens eines weiteren Ultraschallsensors erfolgen. Im Ergebnis ergibt sich ein Rollbehälterübersetz-Assistenzsystems, das ausschließlich auf einer Positionsbestimmung mittels Abstandsbestimmung z.B. durch Ultraschall basiert. Eine solche Positionsbestimmung des Lastkraftwagens und/oder des Rollbehälters relativ zum Anhängefahrzeug bietet den Vorteil, dass ein solches Verfahren unempfindlich gegenüber Anhaftungen, also gegenüber Verschmutzungen, an der Sensoroberfläche ist.

Des Weiteren kann zur Energieversorgung der an dem Anhängefahrzeug angeordneten Teile der Signalverarbeitungseinrichtung vorgesehen sein, akkubasierte Systeme zu verwenden. Ein solches akkubasiertes System kann dann im Betrieb des Lastkraftwagens und/oder des Anhängefahrzeugs beispielsweise durch wenigstens eine rekuperierende Achse des Anhängefahrzeugs oder mit einer elektrischen Verbindung zwischen Lastkraftwagen und Anhängefahrzeug betrieben und/oder aufgeladen werden.

In einerweiteren Ausgestaltung kann das Anhängefahrzeug selber über eine Anzahl an Aktuatoren zum selbsttätigen Ausrichten des Anhängefahrzeugs relativ zum Lastkraftwagen verfügen, wobei die Aktuatoren mit der Signalübertragungseinrichtung verbunden sein können. Um den Prozess des Ausrichtens des Anhängefahrzeugs relativ zum Lastkraftwagen auch ausgehend vom Anhängefahrzeug zu steuern, kann vorgesehen sein, dass der wenigstens eine Sensor am Anhängefahrzeug ausgebildet ist, die Position des Anhängefahrzeugs relativ zum Lastkraftwagen zu erfassen oder dass die Signalverarbeitungseinrichtung diese Position ermittelt.

Um das Anhängefahrzeug relativ zum Lastkraftwagen auszurichten, kann die Signalverarbeitungseinrichtung ausgebildet sein, analog zu dem oben beschriebenen Prozess des Ausrichtens des Lastkraftwagens relativ zum Anhängefahrzeug und/oder zum auf diesem aufgesetzten Transportbehälter zu verfahren. Im Speicher des Sollsignalgebers ist hierzu eine Soll-Position des Anhängefahrzeugs relativ zum Lastkraftwagen bereitgestellt, wobei die Signalverarbeitungseinrichtung ausgebildet ist, eine Ist-Position des Anhängefahrzeugs relativ zum Lastkraftwagen aus dem Sensorsignal des wenigstens einen Sensors des Anhängefahrzeugs zu bestimmen. Weiterhin ist die Signalverarbeitungseinrichtung ausgebildet, die so bestimmte Ist-Position mit der Soll-Position des Anhängefahrzeugs relativ zum Lastkraftwagen zu vergleichen und, basierend auf einer Abweichung zwischen der Ist-Position von der Soll-Position des Anhängefahrzeugs relativ zum Lastkraftwagen, eine weitere Führungsinformation zu bilden. Dies kann derart geschehen, dass die weitere Führungsinformation wiederum Steueranweisungen für Steuereingriffe an dem Anhängefahrzeug enthält, die zum Verringern der Abweichung zwischen der Ist-Position von der Soll-Position des Anhängefahrzeugs relativ zum Lastkraftwagen geeignet sind. Die Signalverarbeitungseinrichtung kann weiter ausgebildet sein, diese weitere Führungsinformation nachfolgend an die Anzahl an Aktuatoren des Anhängefahrzeugs zu leiten. Die Anzahl an Aktuatoren des Anhängefahrzeugs kann dann ausgebildet sein, die weitere Führungsinformation in Steuereingriffe am Anhängefahrzeug umzusetzen, um ein Verringern der Abweichung zwischen der Ist-Position von der Soll-Position des Anhängefahrzeugs relativ zum Lastkraftwagen zu bewirken.

Des Weiteren kann ein Lastkraftwagengespann, bestehend aus wenigstens einem Anhängefahrzeug und einem Lastkraftwagen, ausgebildet sein, bei einem Behälterübersetzvorgang die Abweichung zwischen der Ist-Position und der Soll-Position des Transportbehälters und/oder des Lastkraftwagens relativ zum Anhängefahrzeug, wahlweise ausgehend von der Führungsinformation für den Lastkraftwagen und/oder ausgehend von der weiteren Führungsinformation für das Anhängefahrzeug zu verringern. Hierdurch erhöht sich einerseits die Flexibilität des Behälterübersetzprozesses, andererseits kann auf diese Weise die Ausfallsicherheit des Transportbehälterübersetz-Assistenzsystems erhöht werden.

Die Erfindung soll nun anhand von in den Figuren schematisch abgebildeten Ausführungsbeispielen näher erläutert werden. Von den Figuren zeigen:
- Fig. 1: eine Draufsicht eines Behälterübersetzvorgangs mit einem Lastkraftwagen mit aufgesetztem Transportbehälter sowie einem Anhängefahrzeug;
- Fig. 2: eine Seitenansicht eines Behälterübersetzvorgangs mit einem Lastkraftwagen mit einem auf ein Anhängefahrzeug überzusetzenden Transportbehälter;
- Fig. 3: ein Organisationsschema der Signalverarbeitungseinrichtung mit wahlweiser Anbindung an eine graphische Anzeige und zusätzlich oder alternativ an eine Lastkraftwagensteuerung;
- Fig. 4: eine Draufsicht eines Lastkraftwagengespanns mit einem Lastkraftwagen sowie einem Anhängefahrzeug.

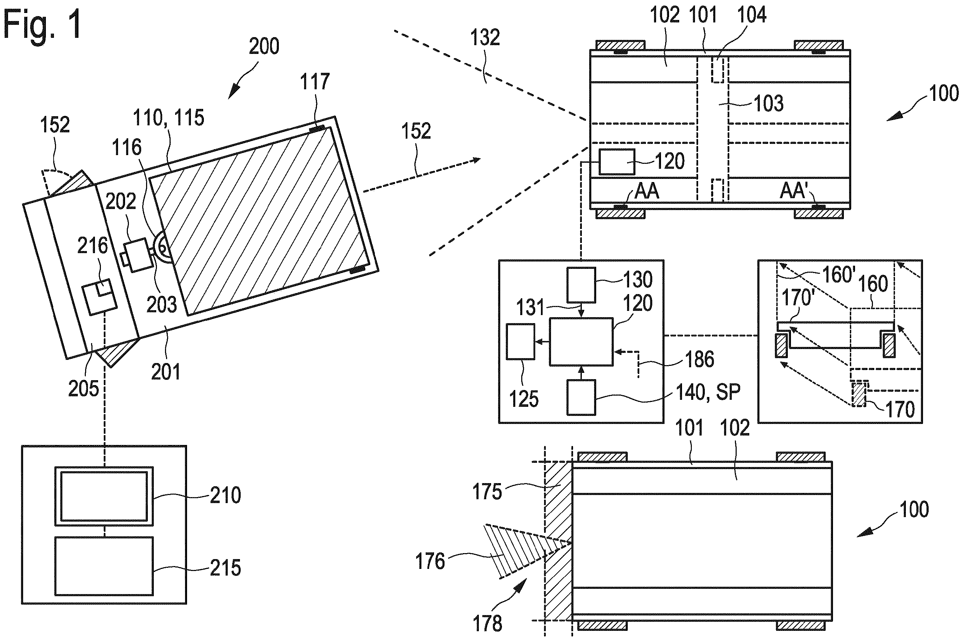

Fig. 1 zeigt einen Lastkraftwagen 200, insbesondere einen Lastkraftwagen, mit einer Transportfläche 201 und einem Ladegerät in Form eines Hakengeräts 202, wobei das Hakengerät 202 einen Haken 203 aufweist. Zudem ist ein Transportbehälter 110, insbesondere ein Rollbehälter 115, mit einem Aufnahmeteil, also insbesondere mit einem Bügel 116, schematisch auf dem Lastkraftwagen 200 aufgesetzt dargestellt. Überdies zeigt Fig. 1 eine Ausführungsvariante eines Anhängefahrzeug 100, die eine Signalverarbeitungseinrichtung 120 aufweist. Der Rollbehälter 115 ist vom Lastkraftwagen 200 auf das Anhängefahrzeug 100 überzusetzen.

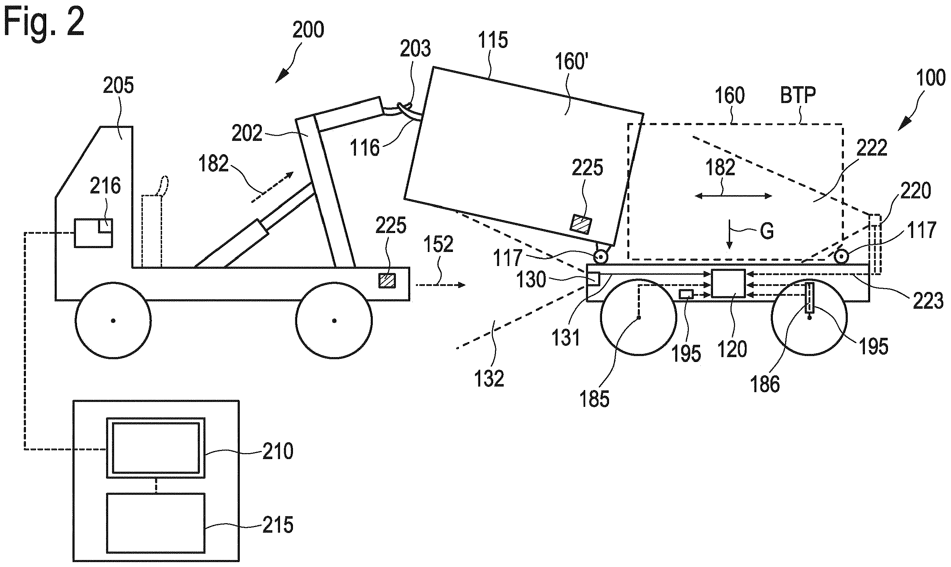

Die Signalverarbeitungseinrichtung 120 kann einen Rechner oder einen Computer umfassen und ist mit einem Sensor 130, der ein Sensorsignal 131 liefert, einer Signalübertragungseinrichtung 125 sowie mit einem Sollsignalgeber 140, insbesondere mit einem Speicher SP, verbunden. Optional kann die Signalverarbeitungseinrichtung 120 zusätzlich mit einer Anzahl an Reifendrucksensoren 185 und/oder Luftfederdrucksensoren 190 und/oder einer Elektronik 195 (Siehe Fig. 2), die ein Signal 186 liefern, verbunden sein. Insbesondere kann der Sensor 130, der ein Bildfeld 132 erfasst, ein optischer Sensor sein, also beispielsweise eine Kamera oder eine Anzahl an Kameras sein. Diese Kamera oder Anzahl an Kameras können beispielsweise an der Seite des Anhängefahrzeugs 100 angeordnet sein, über die das Anhängefahrzeug 100 mit dem Rollbehälter 115 beladen und entladen wird. Der Speicher SP kann zudem insbesondere als nichtflüchtiger Haupt- oder Arbeitsspeicher ausgebildet sein.

Die Signalverarbeitungseinrichtung 120 ist ausgebildet, in einem ersten Schritt das Sensorsignal 131 des Sensors 130 auszuwerten, und nachfolgend eine Ist-Position 160`, 170` eines Lastkraftwagens 200 und/oder eines auf die Transportfläche 201 des Lastkraftwagens 200 bzw. auf dem Hakengerät 202 aufzusetzenden Rollbehälters 115 relativ zum Anhängefahrzeug 100 aus dem ausgewerteten Signal 131 des Sensors 130, beispielsweise der Kamera, zu bestimmen. In einem zweiten Schritt vergleicht die Signalverarbeitungseinrichtung 120 die so bestimmte Ist-Position 160`, 170` mit einer durch den Sollsignalgeber 140 bereitgestellten, also insbesondere mit einer in dem Speicher SP gespeicherten, Soll-Position 160, 170 des Lastkraftwagens 200 und/oder des Rollbehälters 115. Die Soll-Position 160, 170 des Lastkraftwagens 200 und/oder des Rollbehälters 115 ist hierbei die Position des Lastkraftwagens 200 und/oder des Rollbehälters 115, die diese im Sensorsignal 131 des Sensors 130 annehmen müssen, damit das Lastkraftwagen 200 den Rollbehälter 115 mittels seines Hakengeräts 202 auf das Anhängefahrzeug 100 übersetzen kann.

In einer nicht gezeigten Ausführungsvariante kann der Sollsignalgeber 140, zum Bereitstellen der Soll-Position 160, 170 des Lastkraftwagens 200 und/oder eines Rollbehälters 115 relativ zum Anhängefahrzeug 100, alternativ oder zusätzlich zum Speicher SP als eine Anzahl an Sollsignalsensoren 145 ausgebildet sein, die beispielsweise die aktuelle Lage der Bereiche des Aufsetzens des Rollbehälters 115 auf dem Anhängerfahrzeug, auch unter Berücksichtigung der Höhenverhältnisse im unebenen Gelände erfassen oder die Daten für die Definition der Anhängerfahrzeugebenen, der Begrenzungen auf dem Anhängefahrzeug (100) oder der zur Verfügung stehenden Annäherungskorridore liefern. In diesem Fall kann die Signalverarbeitungseinrichtung 120, die dann ebenfalls mit der Anzahl an Sollsignalsensoren 145 verbunden ist, weiter ausgebildet sein, die Soll-Position 160, 170 dynamisch aus einem Sensorsignal der Anzahl an Sollsignalsensoren 145 zu bestimmen. Hierbei kann die Signalverarbeitungseinrichtung überdies ausgebildet sein, Komponenten K und/oder Konturen KT des Lastkraftwagens 200 und/oder des Anhängefahrzeugs 100 und/oder des Rollbehälters 115 aus dem Sensorsignal der Anzahl an Sollsignalsensoren 145 zu bestimmen. Dies betrifft beispielsweise die Rollen 117 des Rollbehälters 115, aus deren Lage die Rollbehälterausführung bestimmt werden kann, oder den Schlitten 103 auf dem Anhängefahrzeugs 100.

Zusätzlich oder andererseits kann die Signalverarbeitungseinrichtung 120 auch ausgebildet sein, Strukturen, Komponenten K und/oder Konturen KT auch aus dem Sensorsignals 131 des Sensors 130 auszuwerten und zur Ermittlung der Ist-Positionen 160`, 170` zu nutzen.

Ermittelt die Signalverarbeitungseinrichtung 120 aus dem Vergleich der Ist-Position 160`, 170` mit der Soll-Position 160, 170 des Lastkraftwagens 200 und/oder des Rollbehälters 115 relativ zum Anhängefahrzeug 100 eine korrekturbedürftige Abweichung, ist die Signalverarbeitungseinrichtung 120 ausgebildet, eine Führungsinformation 150, basierend auf dieser Abweichung, für den Lastkraftwagen 200 zu bilden. Die so gebildete Führungsinformation 150 enthält dabei Steueranweisungen 151 für Steuereingriffe 152 an dem Lastkraftwagen 200 und/oder dessen Hakengerät 202, die zum Verringern der Abweichung zwischen der Ist-Position 160`, 170` von der Soll-Position 160, 170 des Lastkraftwagens 200 und/oder des Rollbehälters 115 relativ zum Anhängefahrzeug 100 geeignet sind. Diese Steuereingriffe 152 an dem Lastkraftwagen 100 umfassen hierbei die Längs- sowie die Querführung des Lastkraftwagens 200, das heißt, beispielsweise Lenkbewegungen oder ein Beschleunigen oder Verzögern des Lastkraftwagens 200, aber auch ein Verfahren des Hakengeräts 202.

Für Behälterübersetzprozesse, bei denen ein Rollbehälter 115 von dem Anhängefahrzeug 100 in umgekehrter Richtung durch das Hakengerät 202 abgeladen und auf den Lastkraftwagen 200 geladen werden soll, ist die Signalverarbeitungseinrichtung 120 zudem ausgebildet, den Lastkraftwagen 200 relativ zu dem Anhängefahrzeug 200 und/oder zu einem auf der Transportfläche 101 des Anhängefahrzeugs 100 aufgesetzten Rollbehälter 115 auszurichten. Dies geschieht analog zu dem oben beschriebenen Behälterübersetzprozess, bei dem der Rollbehälter 115 auf das Anhängefahrzeug 100 geladen wird. Die Signalverarbeitungseinrichtung 120 generiert auch hierbei Steuerungsanweisungen 151 für Steuerungseingriffe 152 am Lastkraftwagen 200, die geeignet sind, eine Abweichung zwischen einer Ist-Position 170' von einer Soll-Position 170 des Lastkraftwagens 200 relativ zum Anhängefahrzeug 100 zu verringern. Es ist somit vorgesehen, dass die Signalverarbeitungseinrichtung 120, im Zusammenwirken mit dem wenigstens einen Sensor 130, also beispielsweise mit der Kamera oder der Anzahl an Kameras, beide Formen des Behälterübersetzprozesses, also den Übersetzprozess des Rollbehälters 115 auf bzw. von einem Anhängefahrzeug 100, unterstützt.

Für das Umsetzen der Führungsinformation 150 als Steuereingriffe 152 am Lastkraftwagen 200 und/oder am Hakengerät 202 durch den Lastkraftwagen 200 und/oder das Hakengerät 202, kann die Führungsinformation 150 kontinuierlich mittels der Signalübertragungseinrichtung 125 des Anhängefahrzeugs 100 an die Signalübertragungseinrichtung 216 des Lastkraftwagens 200 übertragen werden. In dem Ausführungsbeispiel der Fig. 1 ist vorgesehen, dass die Signalverarbeitungseinrichtung 120 mitsamt dessen Komponenten, nämlich dem Sollsignalgeber 140, dem wenigstens einen Sensor 130 und der Signalübertragungseinrichtung 125, am Anhängefahrzeug 100 angeordnet ist. Dies schließt jedoch eine davon abweichende Anordnung nicht aus. In einem nicht gezeigten Ausführungsbeispiel kann beispielsweise vorgesehen sein, dass das Anhängefahrzeug 100 nur den wenigstens einen Sensor 130 und die Signalübertragungseinrichtung 125 aufweist. Die Signalverarbeitungseinrichtung 120 mit dem Sollsignalgeber 140 und einerweiteren Signalübertragungseinrichtung 216 aber am Lastkraftwagen 200 angeordnet sind.

In einer ersten Ausführungsvariante werden die Steueranweisungen 151 für den Lastkraftwagen 200 beispielsweise einem Fahrzeugführer zum manuellen Verringern der Abweichung der Ist-Position 160`, 170` von der Soll-Position 160, 170 des Lastkraftwagens 200 und/oder des Rollbehälters 115 relativ zum Anhängefahrzeug 100 auf einer Anzeige 210, also insbesondere einem Display, des Lastkraftwagens 200 zur Anzeige gebracht. Die Anzeige 210 kann ein Teil des Fahrerhauses 205 sein aber auch, unabhängig von den Instrumenten des Lastkraftwagens 200, ein separates, insbesondere auch mobiles Anzeigegerät, oder auch ein Kommunikationsmittel sein, gegebenenfalls auch mit zusätzlicher Software und Funktionen. In einer nichtgezeigten Ausführung mit einer separaten, mobilen Anzeige 210, die die Signale oder Führungsfunktionen direkt oder indirekt von der Signalübertragungseinrichtung 125 des Anhängefahrzeuges erhält, kann in dem Anzeigegerät auch der Sollsignalgeber 140 enthalten sein, z.B. in Form von gespeicherten oder zu berechnenden Werten, die beispielsweise mit den Ist-Positionen 160`, 170' vergleichend angezeigt werden. Das Anzeigegerät kann dabei auch die Signalverarbeitungseinrichtung 120 teilweise oder vollständig enthalten.

Alternativ oder zusätzlich zu einer Anzeige 210 für den Fahrer ist es aber auch möglich, dass die Signalverarbeitungseinrichtung 120 die Steueranweisungen 151 zum Auslösen von Lenkbewegungen am Lastkraftwagen 200 und/oder von Verfahrbewegungen am Hankengerät 202 direkt an entsprechende Aktuatoren AF, AF`, AH des Lastkraftwagens 200 übermittelt, beispielsweise an eine Servolenkung des Lastkraftwagens 200. In einer zweiten Ausführungsvariante kann der Lastkraftwagen 200 alternativ oder zusätzlich auch so ausgebildet sein, dass die Signalverarbeitungseinrichtung 120 die Steueranweisungen 151 direkt an eine Lastkraftwagensteuerung 215 übermittelt, die sämtliche Steueranweisungen 151 am Lastkraftwagen 200 selbsttätig umsetzt.

In diesem Zusammenhang kann die Signalverarbeitungseinrichtung 120 in einer Ausführungsvariante ausgebildet sein, beispielsweise bei einem Behälterübersetzprozess oder bei einem Austarieren des Rollbehälters 115 auf der Transportfläche 101 des Anhängefahrzeugs 100, Steueranweisungen 181 an das Hakengerät 202 zu übermitteln. Die Steueranweisungen 181 können, wie für den Lastkraftwagen 200 beschrieben, zur Anzeige gebracht und durch den Fahrer ausgeführt werden oder bei einem dafür geeigneten Hakengerät von angesteuerten Aktoren AH selbsttätig ausgeführt werden.

Fig. 2 zeigt die Situation eines Behälterübersetzvorgangs, in diesem Fall des Übersetzens eines Rollbehälters 115 von einem Lastkraftwagen 200 auf ein Anhängefahrzeug 100, in einer Seitenansicht. Bei dem gezeigten Behälterübersetzvorgang ist der Lastkraftwagens 200 zunächst in eine geeignete Position zu überführen, die das Übersetzen des Rollbehälters 115 auf die Transportfläche 101 des Anhängefahrzeugs 100 mittels des Hakengeräts 202 des Lastkraftwagens 200 ermöglicht. Die Steuereingriffe 152 am Lastkraftwagen 200, die durch Steuerungsanweisungen 151 der Signalverarbeitungseinrichtung 120 veranlasst sind, sind dergestalt, dass der Lastkraftwagen 200 beziehungsweise das Hakengerät 202 derart relativ zu dem Anhängefahrzeug 100 ausgerichtet wird, dass sich der Lastkraftwagen 200 beziehungsweise das Hakengerät 202 in einem zulässigen Soll-Relativpositionsbereich 175 und in einem zulässigen Soll-Relativwinkelbereich 176 relativ zum Anhängefahrzeug 100 befindet. Beide Relativbereiche bilden hierbei den Soll-Relativbereich 178.

Der Soll-Relativpositionsbereich 175 bezeichnet einen zur Mittelachse des Anhängefahrzeuges 100 ausgerichteten Abstandsbereich, zwischen der dem Anhängefahrzeug 100 zugewandten Seite des Lastkraftwagens 200 und der dem Lastkraftwagen 200 zugewandten Seite des Anhängefahrzeugs 100, innerhalb dessen ein erfolgreiches Aufsetzen oder Übersetzen des Rollbehälters 115 möglich ist. Der Soll-Relativwinkelbereich 176 bezeichnet einen zulässigen Winkelbereich, zwischen einer Längsachse des Lastkraftwagens 200 bzw. des auf diesem ausgesetzten Rollbehälters 115 und einer Längsachse Anhängefahrzeugs 100, innerhalb dessen en erfolgreiches Übersetzen des Rollbehälters 115 möglich ist. Der Soll-Relativpositionsbereich 175 und der Soll-Relativwinkelbereich 176 bilden den Soll-Relativbereich 178. Für das Übersetzen des Rollbehälters 115 von dem Anhängefahrzeug 100 auf den Lastkraftwagen 200, oder das Übersetzen des Rollbehälters 115 in umgekehrter Richtung von dem Lastkraftwagen 200 auf das Anhängefahrzeug 100, mittels des Hakengeräts 202 des Lastkraftwagens 200 ist insbesondere der Relativwinkel zwischen der Längsachse des Lastkraftwagens 200 bzw. der Längsachse des Hakengeräts 202 und der Längsachse des Anhängefahrzeugs 100 entscheidend, gleichfalls der Versatz der Längsachsen. Überdies ist ein geringer Relativwinkel auch für die Führung des Rollbehälters 115 über das Anhängefahrzeug 100, das heißt, von der Aufsetzposition in die Behältertransportposition BTP und in umgekehrter Richtung bedeutsam.

Überdies ist die Signalverarbeitungseinrichtung 120 analog ausgebildet, das Positionieren des Lastkraftwagens 200 relativ zu einem Anhängefahrzeug 100 im Rahmen von Rollbehälterübersetzprozessen zu unterstützen. Bei einem Rollbehälterübersetzprozess hat der Lastkraftwagen 200 einen Rollbehälter 115 auf seiner Transportfläche 201 bzw. dem Ladegerät, um diesen dann auf ein Anhängefahrzeug 100 überzusetzen, oder der Lastkraftwagen 200 nimmt in umgekehrter Richtung einen Rollbehälter 115 von einem Anhängefahrzeug 100 auf. Im erstgenannten Fall ist, wie in Fig. 2 dargestellt, der Rollbehälter 115 mittels des Hakengeräts 202 auf das Anhängefahrzeug 100 überzusetzen. Hierzu ist der Lastkraftwagen 200 in einen zulässigen Soll-Relativpositionsbereich 175 sowie einen zulässigen Soll-Relativwinkelbereich 176 relativ zum Anhängefahrzeug 100 zu überführen.

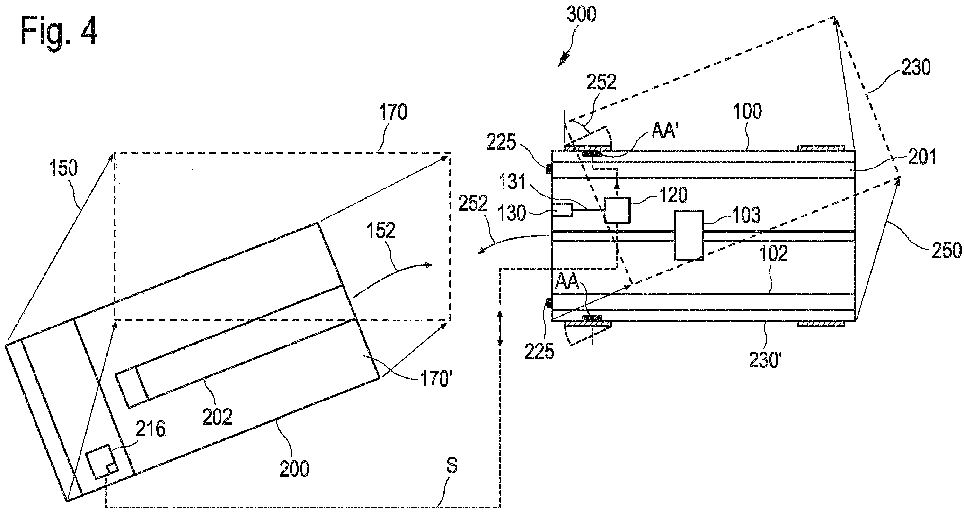

Das zu beladene Anhängefahrzeug 100 verfügt für den Übersetzvorgang entweder über Laufrollenbahnen 102, auf denen der Rollbehälter 115 mit seinen Rollen abrollen kann, oder das Anhängefahrzeug 100 ist mit einem Schlitten 103 (dargestellt in Fig. 4) ausgestattet, über den der darauf platzierte Rollbehälter 115 in Anhängefahrzeuglängsrichtung mittels des Hakengeräts 202 des Lastkraftwagens 200 in die Behältertransportposition BTP bewegt wird. Im Falle eines Anhängefahrzeuges 100 mit Schlitten 103 muss der Rollbehälter 115 zunächst auf dem Schlitten platziert werden. Dazu müssen im Ausführungsbeispiel die Rollen 117 des Rollbehälters 115 in die dafür vorgesehenen Mulden 104 am Schlitten 103 des Anhängefahrzeugs 100 positioniert werden.

Um die Präzision des Positionierens des Lastkraftwagens 200 relativ zum Anhängefahrzeug 100 im Rahmen eines Behälterübersetzprozesses zu erhöhen, können am Lastkraftwagen 200, am Rollbehälter 115, aber auch am Anhängefahrzeug 200 zudem eine Anzahl an Positioniermittel 225 vorgesehen sein. Die Positioniermittel 225 können hierbei beispielsweise als aktive RFID-Transponder oder aber auch als aktive Ultraschall-Transponder ausgebildet sein. Die Signalverarbeitungseinrichtung 120 des Anhängefahrzeugs 100 zieht, sobald der Lastkraftwagen 200 hinreichend nah an das Anhängefahrzeug 100 herangeführt wurde, das Signal der Transponder zusätzlich heran, um die Präzision des Positionierens des Lastkraftwagens 200 relativ zum Anhängefahrzeug 100 zu erhöhen. Hierzu ist die Signalverarbeitungseinrichtung 120 ausgebildet das Signal der Transponder kontinuierlich beim Bilden der Führungsinformation 150 für den Lastkraftwagen 200 durch die Signalverarbeitungseinrichtung 120 zu berücksichtigen. Alternativ ist es auch möglich, die Positioniermittel 225 als passive Transponder auszuführen. In diesem Zusammenhang kann die Signalverarbeitungsrichtung 120 ausgebildet sein, ein entsprechendes Signal an die passiven Transponder zu senden und das von den passiven Transpondern in Reaktion zurückgeworfene Signal zu empfangen, um dieses zusätzlich beim Bilden der Steueranweisungen 151 für Steuereingriffe 152 am Lastkraftwagen 200 mit einzubeziehen und somit die Präzision des Positionierens des Lastkraftwagens 200 zu erhöhen.

In einer nicht gezeigten Ausführungsvariante können die Positioniermittel 225 auch als eine Anzahl an optischen Kennzeichnungen, beispielsweise als am Lastkraftwagen 200 und/oder am Anhängefahrzeug 100 und/oder am Hakengerät 202 angebrachte Markierungen, ausgebildet sein, die vorzugsweise durch die Kamera oder das Kamerasystem oder dergleichen optische Sensoren erfasst werden.

Überdies zeigt die Fig. 2 die Situation, in der der wenigstens eine Sensor 130 des Anhängefahrzeugs 100 ausgebildet ist, als ein erster Sensor 130, zum Ausrichten des Lastkraftwagens 200 relativ zum Anhängefahrzeug 100, und weiter als ein zusätzlicher, zweiter Sensor 220, angeordnet, um ein Positionieren des Rollbehälters 115 auf der Transportfläche 101 des Anhängefahrzeugs 100 zu erfassen. Grundsätzlich ist der Rollbehälter 115 auf der Transportfläche 101 in der Behältertransportposition BTP zu positionieren, insbesondere derart, dass die Gewichtskraft G des Rollbehälters 115 gleichmäßig auf die Achsen des Anhängefahrzeugs 100 wirkt. Nachdem der Lastkraftwagen 200 relativ zum Anhängefahrzeug 100 in die Behälterübersetzposition überführt wurde, erfasst hierzu der weitere Sensor 220 zusätzlich die Position und/oder die Bewegungsbahn des Rollbehälters 115 relativ zu der Transportfläche 101 des Anhängefahrzeugs 100. Für die Ausführung des zweiten Sensors 220, kommen die gleichen Systeme wie für den ersten Sensor 130 infrage, beispielsweise eine Kamera, Laser- oder auch Ultraschallsensoren. In einer nichtdargestellten Ausführungsvariante kann der weitere Sensor 220 auch als eine Anzahl an Lichtschranken LS ausgebildet sein. Die Auswertung des Sensorsignals 223 des zweiten Sensors 220 durch die Signalverarbeitungseinrichtung 120 kann in analoger Weise wie beim ersten Sensor 130 erfolgen, indem die Ist-Positionen 160` des Rollbehälters 115 mit einer Soll-Positionen 160 verglichen wird und die daraus abgeleiteten Anweisungen z.B. auf einer Anzeige 210 dargestellt werden oder z.B. zu Steueranweisungen 181 für Steuereingriffe 182 an dem Hakengerät 202 des Lastkraftwagens 200 führen. Hierbei kann auch vorgesehen sein, dass die Signalverarbeitungseinrichtung 120 anhand des Sensorsignals 223 des zweiten Sensors 220 ermittelt, ob die Rollen 117 des Rollbehälters 115 erfolgreich in die Mulden des Schlitten 103 bewegt wurden.

Das Vorsehen eines zusätzlichen, zweiten Sensors 220 schließt jedoch nicht aus, dass in einer hier nicht gezeigten Ausführungsvariante auch ausschließlich der wenigstens eine Sensor 130 des Anhängefahrzeugs 100 angeordnet und ausgebildet sein kann, dass dieser sowohl die Annäherung des Lastkraftwagens 200 an das Anhängefahrzeug 100, als auch die Bewegung des Rollbehälters 115 auf dem Anhängefahrzeug 100 erfasst.

Die Signalverarbeitungseinrichtung 120 kann zudem ausgebildet sein, die Ist-Position 160` des Rollbehälters relativ zu der Transportfläche 101 aus dem Sensorsignal 223 des zweiten Sensors 220 und eine Gewichtsverteilung des Rollbehälters 115 auf der Transportfläche 101 zu bestimmen. Das Bestimmen der Gewichtsverteilung des Rollbehälters 115 kann hierbei bevorzugt mittels einer Anzahl an Reifendrucksensoren 185 erfolgen, da sich der Reifendruck in den einzelnen Reifen in Abhängigkeit der Gewichtsverteilung ändert. Alternativ kann das Bestimmen der Gewichtsverteilung des Rollbehälters 115 auch mittels einer Anzahl an Luftfederdrucksensoren 190 z.B. an den Bälgen und/oder einer Elektronik 195, beispielsweise eines Stabilitätssystems, des Anhängefahrzeugs 100 erfolgen. Basierend auf der Gewichtsverteilung des Rollbehälters 115 auf der Transportfläche 101 und der durch den zweiten Sensor 220 erfassten und aus dessen Sensorsignal 223 durch die Signalverarbeitungseinrichtung 120 bestimmten Ist-Position 160` des Rollbehälters relativ zu der Transportfläche 101 kann die Signalverarbeitungseinrichtung 120 eine Positionierungsinformation 180 für den Rollbehälter 115 bilden. Diese Positionierungsinformation 180 enthält Steueranweisungen 181 für Steuereingriffe 182 an dem Hakengerät 202 des Lastkraftwagens 200 bzw. an dem Lastkraftwagen 200 selber. Mithilfe der Steuereingriffe 182 am Hakengerät 202 bzw. am Lastkraftwagen 200 kann der Rollbehälter 115 auf der Transportfläche 101 positioniert und/oder austariert werden. Im Ergebnis wird der Rollbehälter 115 auf der Transportfläche 101 des Anhängefahrzeugs 100 in eine Position überführt, die der gewünschten Lastverteilung auf dem Anhängefahrzeug 100 entspricht. Auf diese Weise kann im Falle des Übersetzens eines Rollbehälters 115 vom Lastkraftwagen 200 auf ein Anhängefahrzeug 100 der Rollbehälter 115 in die Behältertransportposition BTP auf dem Anhängefahrzeug 100 bewegt werden.

Auch kann die Signalverarbeitungseinrichtung 120 ausgebildet sein, aus dem Sensorsignal 223 des zweiten Sensors 220 beispielsweise ein Verrutschen des Rollbehälters 115 auf der Transportfläche 101 des Anhängefahrzeugs 100 auch während der Fahrt zu erkennen. In jedem der vorgenannten Fälle kann die Signalverarbeitungseinrichtung 120 ausgebildet sein, den Fahrzeugführer entsprechend zu informieren, beispielsweise mittels einer entsprechenden Anzeige auf der graphischen und/oder bildlichen Anzeige 210 oder auch durch ein Warnsignal.

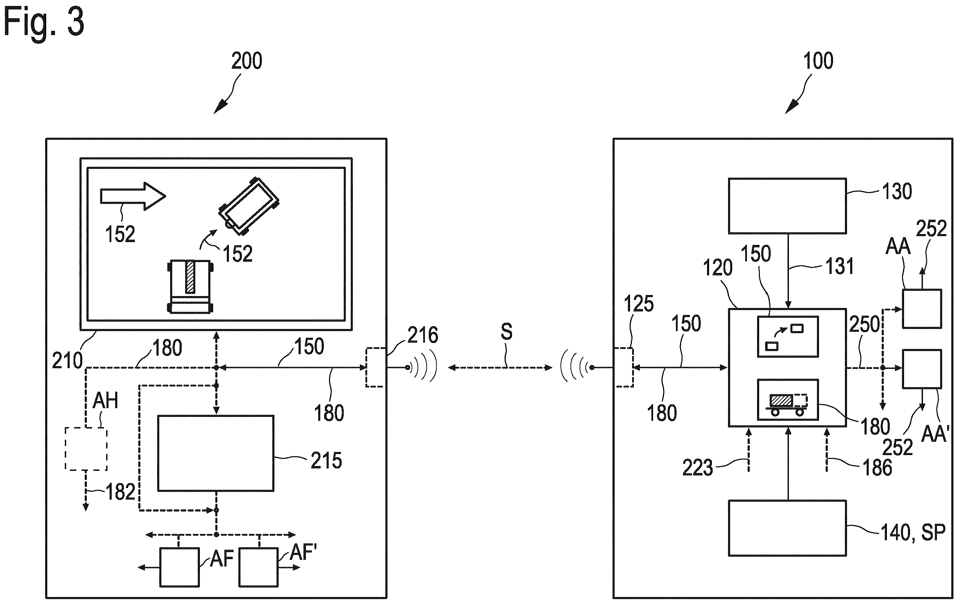

Fig. 3 zeigt ein Organisationsschema einer Ausführungsvariante der Signalverarbeitungseinrichtung 120 mit wahlweiser Anbindung an eine graphische Anzeige 210, und alternativ oder zusätzlich an eine Lastkraftwagensteuerung 215 mittels einer Signalübertragungseinrichtung 125 am Anhängefahrzeug 100 und einer weiteren Signalübertragungseinrichtung 216 am Lastkraftwagen 200. Im Ausführungsbeispiel der Fig. 3 sind sowohl die graphische Anzeige 210, als auch die Lastkraftwagensteuerung 215 am Lastkraftwagen 200 angeordnet. Die Anzeige 210 kann hierbei als ein Teil des Lastkraftwagens 200 ausgebildet sein, beispielsweise in eine bereits vorhandene Anzeige des Lastkraftwagens 200 wie ein digitales Cockpit oder dergleichen integriert sein, oder die Anzeige 210 kann als ein fest in oder am Lastkraftwagen installiertes Zusatzgerät oder als ein mobiles Zusatzgerät ausgebildet sein.

Mit der Signalverarbeitungseinrichtung 120 ist zunächst wenigstens ein Sensor 130, also eine Kamera oder eine Anzahl an Kameras, ein Sollsignalgeber 140, also vorzugsweise ein nichtflüchtiger Haupt- oder Arbeitsspeicher sowie die Signalübertragungseinrichtung 125, also beispielsweise ein WIFI- oder Bluetooth-Modul, verbunden. Optional kann die Signalverarbeitungseinrichtung 120 ein Signal 186 einer Anzahl an Reifendrucksensoren 185, Luftfederdrucksensoren 190 und/oder einer Elektronik 195 des Anhängefahrzeugs 100 mit einbeziehen, und eine Positionierungsinformation 180 für das Hakengerät 202 des Lastkraftwagens 200.

Ausgehend von einer Führungsinformation 150 für den Lastkraftwagens 200 kann die Signalverarbeitungseinrichtung 120 - in einer ersten Ausführungsvariante - die Steueranweisungen 151 auf einer graphischen Anzeige 210 einem Fahrzeugführer zur Anzeige bringen, oder die Steueranweisungen 151 - in einer zweiten Ausführungsvariante - direkt an entsprechende Aktuatoren AF, AF`, AH des Lastkraftwagens 200 zur selbsttätigen Umsetzung dieser Steueranweisungen 151 in Steuereingriffe 152 an dem Lastgentransportfahrzeug 200 und/oder dessen Hakengerät 202 weiterleiten. Alternativ oder zusätzlich können die Steueranweisungen 151 auch an eine Lastkraftwagensteuerung 215 geleitet werden. Diese steuert dann ihrerseits die Aktuatoren AF, AF`, AH, beispielsweise eine Servolenkung des Lastkraftwagens 200, zur Umsetzung der notwendigen Steuereingriffe 152, um die Abweichung zwischen der Ist-Position 160`, 170` von der Soll-Position 160, 170 des Lastkraftwagens 200 bzw. des Rollbehälters 115 relativ zum Anhängefahrzeug 100 zu verringern.

Überdies kann die Signalverarbeitungseinrichtung 120 ausgebildet sein, ausgehend von einer durch die Signalverarbeitungseinrichtung 120 mittels des wenigstens einen Sensors 130 gebildeten Positionierungsinformation 180 für das Hakengerät 202 des Lastkraftwagens 200, Steueranweisungen 181 an eine Anzahl an Aktuatoren AH für das Hakengerät 202 des Lastkraftwagens 200 zu übermitteln. Die Anzahl an Aktuatoren AH für das Hakengerät 202 positioniert dieses mittels der Steuereingriffe 182 entsprechend der zuvor aus der Positionierungsinformation 180 gebildeten Steueranweisungen 181. Diese Art der Steuerung des Hakengeräts 202 schließt jedoch eine manuelle Steuerung durch einen Fahrzeugführer beispielsweise über die graphische Anzeige 210 nicht aus.

Des Weiteren kann die Signalverarbeitungseinrichtung 120 ausgebildet sein, in einer Ausführungsvariante des Anhängefahrzeugs 100 mit einer Anzahl an Aktuatoren AA, AA`, zum selbsttätigen Verfahren des Anhängefahrzeugs 100, eine Führungsinformation 250 für das Anhängefahrzeug 100 zu bilden, die geeignet ist, die Abweichung zwischen der Ist-Position 160`, 170` von der Soll-Position 160, 170 des Lastkraftwagens 200 bzw. des Rollbehälters 115 relativ zum Anhängefahrzeug 100 durch ein Verfahren des Anhängefahrzeugs 100 zu verringern.

Fig. 4 zeigt eine Ansicht eines Lastkraftwagengespanns 300, bestehend aus einem Lastkraftwagen 200 und einem Anhängefahrzeug 100. In dem dargestellten Beispiel sind an dem Anhängefahrzeug 100 eine Anzahl an Aktuatoren AA, AA' angeordnet, mit dessen Hilfe das Anhängefahrzeug 200 selbsttätig verfahrbar ist. Zudem ist die Anzahl an Aktuatoren AA, AA' mit der Signalverarbeitungseinrichtung 120 verbunden. Weiterhin weist das Anhängefahrzeug 100 wenigstens einen Sensor 130 auf, der mit der Signalverarbeitungseinrichtung 120, angeordnet am Anhängefahrzeugs 100, verbunden ist. Mit der Signalverarbeitungseinrichtung 120 ist überdies eine Signalübertragungseinrichtung 125 verbunden, die die Führungsinformation 150 für den Lastkraftwagen 200 direkt oder indirekt an die Signalverarbeitungseinrichtung 216 des Lastkraftwagen 200 übertragen kann, zum Verringern der Abweichung zwischen der Ist-Position 160`, 170` von der Soll-Position 160, 170 des Lastkraftwagens 200 bzw. des Rollbehälters 115 relativ zum Anhängefahrzeug 100.

Die Übertragung mittels der Signalübertragungseinrichtungen 125, 216 sind vorzugsweise bidirektional ausgestaltet. Das heißt, dass ein Signal S nicht nur vom Anhängefahrzeug 100 zum Lastkraftwagen 200 übertragen werden kann, sondern, dass eine Signalübertragung auch in umgekehrter Richtung möglich sein kann. Beispielsweise kann vorgesehen sein, dass der Fahrzeugführer über das graphische Display 210, das ausgebildet sein kann als berührungsempfindliches Display, mittels eines entsprechenden Befehls eine Behältertransportsicherung am Anhängefahrzeug 100, beispielswiese eine Verriegelung, vor bzw. nach einem Behälterübersetzprozess, feststellen bzw. lösen kann.

Im Rahmen eines Behälterübersetzprozesses ist es möglich, dass entweder der Lastkraftwagen 200, ausgehend von einer Erfassung der Position des Lastkraftwagens 200 durch den wenigstens einen Sensors 130 des Anhängefahrzeugs 100, relativ zu dem Anhängefahrzeug 100 ausgerichtet wird oder dass sich das Anhängefahrzeug 100 über ein Ansteuern von dessen Aktuatoren AA, AA' relativ zum Lastkraftwagen 200 ausrichtet.

Um das Anhängefahrzeug 100 relativ zum Lastkraftwagen 200 zu positionieren, verfährt die Signalverarbeitungseinrichtung 120 analog zu dem oben beschriebenen Prozess des Positionierens des Lastkraftwagens 200 relativ Anhängefahrzeug 100. Bei dieser Ausführungsvariante kann der Sollsignalgeber 140 der Signalverarbeitungseinrichtung 120 eine Soll-Position 230 des Anhängefahrzeugs 100 relativ zum Lastkraftwagen 200 bereitstellen. Die Signalverarbeitungseinrichtung 120 des Anhängefahrzeugs 100 kann überdies ausgebildet sein, eine Ist-Position 230' des Anhängefahrzeug 100 relativ zum Lastkraftwagen 200 aus dem Sensorsignal 131 des wenigstens einen Sensors 130 des Anhängefahrzeug 100 zu bestimmen. Weiterhin kann die Signalverarbeitungseinrichtung 120 die aus dem Sensorsignal 131 bestimmte Ist-Position 230` des Anhängefahrzeugs 100 mit einer Soll-Position 230 des Anhängefahrzeugs 100 relativ zum Lastkraftwagen 200 vergleichen und bei Vorliegen einer Abweichung zwischen der Ist-Position 230' von der Soll-Position 230 Anhängefahrzeug 100 relativ zum Lastkraftwagen 200 eine Führungsinformation 250 für das Anhängefahrzug 100 bilden. Dies kann derart geschehen, dass die Führungsinformation 250 Steueranweisungen 251 für Steuereingriffe 252 an dem Anhängefahrzeug 100 enthält, die zum Verringern der Abweichung zwischen der Ist-Position 230' von der Soll-Position 230 des Anhängefahrzeugs 100 relativ zum Lastkraftwagen 200 geeignet sind.

Somit kann vorgesehen sein, dass sich das Anhängefahrzeug 100 selbsttätig mittels eines geeigneten Ansteuerns der Anzahl an Aktuatoren AA, AA' in die Behälterübersetzposition relativ zum Lastkraftwagen 200 überführt. Das Ansteuern der Anzahl an Aktuatoren AA, AA' des Anhängefahrzeugs 100 kann ausgehend von der durch die Signalverarbeitungseinrichtung 120 bestimmten Führungsinformation 250 für das Anhängefahrzeug 100 erfolgen. Die Aktuatoren AA, AA' setzen dann die notwendigen Steuereingriffe 252 an dem Anhängefahrzeug 100 um.

### Bezugszeichenliste

- 100: Anhängefahrzeug
- 101: Transportfläche des Anhängefahrzeugs
- 102: Laufrollenbahnen des Anhängefahrzeugs
- 103: Schlitten des Anhängefahrzeugs
- 104: Mulden des Schlittens
- 110: Transportbehälter
- 115: Rollbehälter
- 116: Bügel des Rollbehälters
- 117: Rollen des Rollbehälters
- 120: Signalverarbeitungseinrichtung
- 125: Signalübertragungseinrichtung des Anhängefahrzeugs
- 130: Sensor
- 131: Sensorsignal
- 132: Bildfeld des Sensors
- 140: Sollsignalgeber
- 145: Anzahl an Sollsignalsensoren
- 150: Führungsinformation
- 151: Steueranweisungen Lastkraftwagen
- 152: Steuereingriffe Lastkraftwagen
- 160: Soll-Position des Transportbehälters/Rollbehälters
- 160': Ist-Position des Transportbehälters/Rollbehälters
- 170: Soll-Position des Lastkraftwagens
- 170': Ist-Position des Lastkraftwagens
- 175: Soll-Relativpositionsbereich
- 176: Soll-Relativwinkelbereich
- 178: Soll-Relativbereich
- 180: Positionierungsinformation
- 181: Steueranweisungen Hakengerät
- 182: Steuereingriffe Hakengerät
- 185: Reifendrucksensor
- 186: Signal des Reifendrucksensors, Luftfederdrucksensors, Elektronik des Anhängefahrzeugs
- 190: Luftfederdrucksensor
- 195: Elektronik des Anhängefahrzeugs
- 200: Lastkraftwagen
- 201: Transportfläche des Lastkraftwagens
- 202: Hakengerät des Lastkraftwagens
- 203: Haken des Hakengeräts
- 205: Führerhaus des Lastkraftwagens
- 210: Anzeige
- 215: Lastkraftwagensteuerung
- 216: Signalübertragungseinrichtung des Lastkraftwagens
- 220: weiterer Sensor
- 222: Bildfeld des weiteren Sensors
- 223: Sensorsignal des weiteren Sensors
- 225: Positioniermittel
- 230: Soll-Position des Anhängefahrzeugs
- 230': Ist-Position des Anhängefahrzeugs
- 250: Führungsinformation des Anhängefahrzeugs
- 251: Steueranweisungen des Anhängefahrzeugs
- 252: Steuereingriffe des Anhängefahrzeugs
- 300: Lastkraftwagengespann
- AA, AA': Aktuator Anhängefahrzeug
- AF, AF': Aktuator Lastkraftwagen
- AH: Aktuator Hakengerät Lastkraftwagen
- BTP: Behältertransportposition
- G: Gewichtskraft
- K: Komponente
- LS: Anzahl an Lichtschranken
- KT: Kontur
- S: Signal
- SP: Speicher

## Patentansprüche

1. Anhängefahrzeug (100), mit
- einer Transportfläche (101) für Transportbehälter (110),
**gekennzeichnet durch**
- eine Signalverarbeitungseinrichtung (120),
- wenigstens einen Sensor (130) zum Erfassen einer Position eines Transportbehälters (110) und/oder eines Lastkraftwagens (200) relativ zum Anhängefahrzeug (100) und zum Generieren eines Sensorsignals (131),
- eine Signalübertragungseinrichtung (125), zum Übertragen eines Signals (S) zwischen dem Anhängefahrzeug (100) und dem Lastkraftwagen (200) oder einem Anzeigegerät, oder zum Übertragen eines Signals (S) zwischen dem Anhängefahrzeug (100) und dem Lastkraftwagen (200) und einem Anzeigegerät und
- einen Sollsignalgeber (140) zum Bereitstellen einer Soll-Position (160, 170) des Transportbehälters (110) und/oder Lastkraftwagens (200) relativ zum Anhängefahrzeug (100),
wobei
- die Signalverarbeitungseinrichtung (120) mit dem wenigstens einen Sensor (130), dem Sollsignalgeber (140) und der Signalübertragungseinrichtung (125) verbunden ist und ausgebildet ist,
- zum Bestimmen einer Ist-Position (160', 170') des Transportbehälters (110) und/oder Lastkraftwagens (200) relativ zum Anhängefahrzeug (100) aus dem Sensorsignal (131) des wenigstens einen Sensors (130),
- zum Vergleichen der Ist-Position (160', 170') mit der Soll-Position (160, 170) des Transportbehälters (110) und/oder Lastkraftwagens (200) relativ zum Anhängefahrzeug (100), und
- zum Bilden einer Führungsinformation (150) für ein Übersetzen eines Transportbehälters von dem Lastkraftwagen auf das Anhängefahrzeug und/oder für ein Entladen des Anhängefahrzeugs in umgekehrter Richtung, basierend auf einer Abweichung zwischen der Ist-Position (160', 170') von der Soll-Position (160, 170) des Transportbehälters (110) und/oder Lastkraftwagens (200) relativ zum Anhängefahrzeug (100), derart, dass
- die Führungsinformation (150) Steueranweisungen (151) für solche Steuereingriffe (152) an dem Lastkraftwagen (200) und/oder einem Ladegerät enthält, die ein Verringern der Abweichung zwischen der Ist-Position (160', 170') von der Soll-Position (160, 170) des Transportbehälters (110) und/oder Lastkraftwagens (200) relativ zum Anhängefahrzeug (100) bewirken, und wobei
- die Signalübertragungseinrichtung (125) ausgebildet ist, die Führungsinformation (150) an den Lastkraftwagen (200) und/oder an ein Anzeigegerät für einen Fahrer zu übertragen.

2. Anhängefahrzeug (100) gemäß Anspruch 1, **dadurch gekennzeichnet, dass** die Soll-Position (160, 170) des Transportbehälters (110) und/oder Lastkraftwagens (200) relativ zum Anhängefahrzeug (100) einen zulässigen Soll-Relativbereich (178) repräsentiert, gebildet durch einen zulässigen Soll-Relativpositionsbereich (175) und einen zulässigen Soll-Relativwinkelbereich (176), wobei sich der Transportbehälter (110) und/oder der Lastkraftwagen (200) und das Anhängefahrzeug (100) zueinander in dem zulässigen Soll-Relativbereich (178) befinden für ein erfolgreiches Behälterübersetzen.

3. Anhängefahrzeug (100) gemäß Anspruch 1 oder 2, **dadurch gekennzeichnet, dass** der Sollsignalgeber (140) für unterschiedliche Transportbehälter (110) und/oder Lastkraftwagen (200) und/oder Anhängefahrzeuge (100), unterschiedliche Soll-Positionen (160, 170) des Transportbehälters (110) und/oder Lastkraftwagens (200) relativ zum Anhängefahrzeug (100) bereitstellt.

4. Anhängefahrzeug (100) nach wenigstens einem der Ansprüche 1 bis 3, **dadurch gekennzeichnet, dass**
- der wenigstens eine Sensor (130) ausgebildet und angeordnet ist, die Position des Transportbehälters (110) relativ zu der Transportfläche (101) des Anhängefahrzeugs (100) beim Übersetzen des Transportbehälters (110) von dem Lastkraftwagen (200) auf das Anhängefahrzeug (100) und/oder vom Anhängefahrzeug (100) auf den Lastkraftwagen (200) zu erfassen, wobei
- die Signalverarbeitungseinrichtung (120) ausgebildet ist, eine Ist-Position (160') des Transportbehälters (110) relativ zu der Transportfläche (101) aus dem Sensorsignal (131) des wenigstens einen Sensors (130) zu bestimmen und mit der vom Sollsignalgeber (140) bereitgestellten Soll-Position (160) des Transportbehälters (110) relativ zu der Transportfläche (101) zu vergleichen, und
- beim Annähern an die Grenzen des Sollrelativbereiches (178) und/oder beim Erreichen einer Soll-Position (160) des Transportbehälters (110) relativ zu der Transportfläche (101), vorzugsweise der Behältertransportposition (BTP), ein Signal (S) an den Lastkraftwagen (200) mittels der Signalübertragungseinrichtung (125) zu übertragen.

5. Anhängefahrzeug (100) nach wenigstens einem der Ansprüche 1 bis 4, **dadurch gekennzeichnet, dass** die Signalverarbeitungseinrichtung (120) ausgebildet ist, eine Gewichtsverteilung (G) des Transportbehälters (110) auf der Transportfläche (101) des Anhängefahrzeugs (100) aus einem Signal (186) wenigstens eines Reifendrucksensors (185) und/oder eines Luftfederdrucksensors (190) und/oder einer Elektronik (195) des Anhängefahrzeugs zu bestimmen.

6. Anhängefahrzeug (100) gemäß Anspruch 4 oder 5, **dadurch gekennzeichnet, dass**
- die Signalverarbeitungseinrichtung (120) weiter ausgebildet ist, eine Positionierungsinformation (180) zu bilden, basierend auf der Ist-Position (160') und/oder der Gewichtsverteilung (G) des Transportbehälters (110) auf der Transportfläche (101), derart, dass
- die Positionierungsinformation (180) Steueranweisungen (181) für Steuereingriffe (182) an einem Ladegerät (202) des Lastkraftwagens (200) und/oder dem Lastkraftwagen (200) enthält, die ein Positionieren in der Behältertransportposition (BTP) und/oder ein Austarieren des Transportbehälters (110) auf der Transportfläche (101) bewirken.

7. Anhängefahrzeug (100) nach wenigstens einem der Ansprüche 1 bis 6, **dadurch gekennzeichnet, dass** die Signalverarbeitungseinrichtung (120) ausgebildet ist, beim Bestimmen der Ist-Position (160', 170') des Transportbehälters (110) und/oder Lastkraftwagens (200) relativ zum Anhängefahrzeug (100) und/oder zur Transportfläche (101) wenigstens eine Referenzmarkierung, angeordnet an dem Transportbehälter (110) und/oder dem Lastkraftwagen (200) und/oder dem Anhängefahrzeug (100) und/oder der Transportfläche (101) im Sensorsignal (131) des wenigstens einen Sensors (130) zu erfassen.

8. Anhängefahrzeug (100) nach wenigstens einem der Ansprüche 1 bis 7, **dadurch gekennzeichnet, dass** die Signalverarbeitungseinrichtung (120) ausgebildet ist, beim Bestimmen der Ist-Position (160', 170') des Transportbehälters (110) und/oder Lastkraftwagens (200) relativ zum Anhängefahrzeug (100) und/oder zur Transportfläche (101) wenigstens eine Komponente (K) und/oder eine Kontur (KT) des Transportbehälters (110) und/oder des Lastkraftwagens (200) und/oder des Anhängefahrzeugs (100) im Sensorsignal (131) des wenigstens einen Sensors (130) zu erfassen.

9. Anhängefahrzeug (100) nach wenigstens einem der Ansprüche 1 bis 8, **dadurch gekennzeichnet, dass** der wenigstens eine Sensor (130) zum Erfassen der Position des Transportbehälters (110) und/oder Lastkraftwagens (200) relativ zum Anhängefahrzeug (100) als ein optischer Sensor ausgebildet ist.

10. Anhängefahrzeug (100) nach wenigstens einem der Ansprüche 1 bis 9, **dadurch gekennzeichnet, dass** der wenigstens eine Sensor (130) zum Erfassen der Position des Transportbehälters (110) und/oder Lastkraftwagens (200) relativ zum Anhängefahrzeug (100) als ein Sensor zum Erfassen einer Laufzeit eines Signals zwischen Transportbehälter (110) und/oder Lastkraftwagen (200) und Anhängefahrzeug (100) ausgebildet ist, wobei die Signalverarbeitungseinrichtung (120) ausgebildet ist, die Ist-Position (160', 170') des Transportbehälters (110) und/oder Lastkraftwagens (200) aus der Laufzeit des Signals zu bestimmen.

11. Anhängefahrzeug (100) nach wenigstens einem der Ansprüche 1 bis 10, **dadurch gekennzeichnet, dass**
- der Sollsignalgeber (140) der Signalverarbeitungseinrichtung (120) weiter eine Soll-Position (230) des Anhängefahrzeugs (100) relativ zum Lastkraftwagen (200) bereitstellt, wobei
- die Signalverarbeitungseinrichtung (120) weiter ausgebildet ist, eine Ist-Position (230') des Anhängefahrzeugs (100) relativ zum Lastkraftwagen (200) aus dem Sensorsignal (131) des wenigstens einen Sensors (130) des Anhängefahrzeugs (100) zu bestimmen, die Ist-Position (230') mit einer Soll-Position (230) des Anhängefahrzeugs (100) relativ zum Lastkraftwagen (200) zu vergleichen, und
- eine weitere Führungsinformation (250), basierend auf einer Abweichung zwischen der Ist-Position (230') von der Soll-Position (230) des Anhängefahrzeugs (100) relativ zum Lastkraftwagen (200) zu bilden, derart, dass
- die weitere Führungsinformation (250) Steueranweisungen (251) für Steuereingriffe (252) an dem Anhängefahrzeug (100) enthält, die zum Verringern der Abweichung zwischen der Ist-Position (230`) von der Soll-Position (230) des Anhängefahrzeugs (100) relativ zum Lastkraftwagen (200) geeignet sind, wobei
- das Anhängefahrzeug (100) eine Anzahl an Aktuatoren (A) aufweist, zum selbsttätigen Umsetzen der Steueranweisungen (251) an dem Anhängefahrzeug (100).

12. System umfassend ein Anhängefahrzeug gemäß wenigstens einem der Ansprüche 1 bis 11 und ein Anzeigegerät, von denen das Anzeigegerät dazu konfiguriert ist, die Führungsinformation (150) zu empfangen und zu verarbeiten und die Steueranweisungen (151) für Steuereingriffe (152) an dem Lastkraftwagen (200) und/oder dem Ladegerät zur Anzeige zu bringen.

13. Lastkraftwagen (200), für die Verwendung mit einem Anhängefahrzeug gemäß wenigstens einem der Ansprüche 1 bis 11, **dadurch gekennzeichnet, dass**
- der Lastkraftwagen (200) eine Anzeige (210) und eine weitere Signalübertragungseinrichtung (216) aufweist, die zum Empfangen der Führungsinformation (150) für den Lastkraftwagen (200) ausgebildet und mit der Anzeige (210) verbunden ist, wobei
- die Anzeige (210) ausgebildet ist, ausgehend von der Führungsinformation (150) für den Lastkraftwagen (200), zum Anzeigen der Steueranweisungen (151) für einen Fahrer des Lastkraftwagens (200), derart, dass die Abweichung zwischen der Ist-Position (160', 170`) von der Soll-Position (160, 170) des Transportbehälters (110) und/oder Lastkraftwagens (200) relativ zum Anhängefahrzeug (100) durch den Fahrer manuell verringerbar ist.

14. Lastkraftwagen (200) gemäß Anspruch 13, **dadurch gekennzeichnet, dass**
- die Signalübertragungseinrichtung (216) zusätzlich oder alternativ mit einer Lastkraftwagensteuerung (215) verbunden ist, zum selbsttätigen Verfahren des Lastkraftwagens (200), wobei
- die Lastkraftwagensteuerung (215) ausgebildet ist, ausgehend von der Führungsinformation (150) für den Lastkraftwagen (200), zum selbsttätigen Umsetzen der Steueranweisungen (151) an dem Lastkraftwagen (200), derart, dass die Abweichung zwischen der Ist-Position (160', 170') von der Soll-Position (160, 170) des Transportbehälters (110) und/oder Lastkraftwagens (200) relativ zum Anhängefahrzeug (100) durch die Lastkraftwagensteuerung (215) selbsttätig verringerbar ist.

15. Lastkraftwagengespann (300), mit
- wenigstens einem Anhängefahrzeug (100) nach wenigstens einem der Ansprüche 1 bis 11, und einem Lastkraftwagen (200) gemäß Anspruch 13 oder 14 **dadurch gekennzeichnet, dass**
- die Abweichung zwischen der Ist-Position (160', 170') von der Soll-Position (160, 170) des Transportbehälters (110) und/oder Lastkraftwagens (200) relativ zum Anhängefahrzeug (100), wahlweise ausgehend von der Führungsinformation (150) für den Lastkraftwagen (200) und/oder der weiteren Führungsinformation (250) für das Anhängefahrzeug (100) verringerbar ist.

## Claims

1. Trailer vehicle (100), with
- a transport platform (101) for transport containers (110),
**characterised by**
- a signal processing device (120),
- at least one sensor (130) for detecting a position of a transport container (110) and/or a truck (200) relative to the trailer vehicle (100) and for generating a sensor signal (131),
- signal transmission device (125) for transmitting a signal (S) between the trailer vehicle (100) and the truck (200) or a display device, or for transmitting a signal (S) between the trailer vehicle (100) and the truck (200) and a display device; and
- a target signal generator (140) for providing a target position (160, 170) of the transport container (110) and/or truck (200) relative to the trailer vehicle (100),
wherein
- the signal processing device (120) is connected to the at least one sensor (130), the target signal generator (140) and the signal transmission device (125) and is configured,
- for determining an actual position (160', 170') of the transport container (110) and/or truck (200) relative to the trailer vehicle (100) from the sensor signal (131) of the at least one sensor (130),
- for comparing the actual position (160', 170') with the target position (160, 170) of the transport container (110) and/or truck (200) relative to the trailer vehicle (100), and
- for generating guidance information (150) for transferring a transport container from the truck to the trailer vehicle and/or for unloading the trailer vehicle in the reverse direction, based on a deviation between the actual position (160', 170') and the target position (160, 170) of the transport container (110) and/or truck (200) relative to the trailer vehicle (100), such that
- the guidance information (150) contains control instructions (151) for such control interventions (152) on the truck (200) and/or a loading device, which have the effect of reducing the deviation between the actual position (160', 170') and the target position (160, 170) of the transport container (110) and/or truck (200) relative to the trailer vehicle (100), and wherein
- the signal transmission device (125) is adapted to transmit the guidance information (150) to the truck (200) and/or to a display device for a driver.

2. Trailer vehicle (100) according to claim 1, **characterised in that** the target position (160, 170) of the transport container (110) and/or truck (200) relative to the trailer vehicle (100) represents a permissible target relative range (178), formed by a permissible target relative position range (175) and a permissible target relative angle range (176), wherein the transport container (110) and/or the truck (200) and the trailer vehicle (100) are located relative to each other in the permissible target relative range (178) for successful container translation.

3. Trailer vehicle (100) according to claim 1 or 2, **characterised in that** the target signal generator (140) provides different target positions (160, 170) of the transport container (110) and/or truck (200) and/or trailer vehicle (100) relative to the trailer vehicle (100) for different transport containers (110) and/or trucks (200) and/or trailer vehicles (100).

4. Trailer vehicle (100) according to at least one of claims 1 to 3, **characterised in that**
- the at least one sensor (130) is configured and arranged to detect the position of the transport container (110) relative to the transport platform (101) of the trailer vehicle (100) when transferring the transport container (110) from the truck (200) to the trailer vehicle (100) and/or from the trailer vehicle (100) to the truck (200),
wherein
- the signal processing device (120) is configured to determine an actual position (160') of the transport container (110) relative to the transport platform (101) from the sensor signal (131) of the at least one sensor (130) and to compare it with the target position (160) of the transport container (110) relative to the transport platform (101) provided by the target signal generator (140), and
- to transmit a signal (S) to the truck (200) by means of the signal transmission device (125) when approaching the limits of the target relative range (178) and/or when reaching a target position (160) of the transport container (110) relative to the transport platform(101), preferably the container transport position (BTP).

5. Trailer vehicle (100) according to at least one of claims 1 to 4, **characterised in that** the signal processing device (120) is configured to determine a weight distribution (G) of the transport container (110) on the transport platform (101) of the trailer vehicle (100) from a signal (186) of at least one tyre pressure sensor (185) and/or one air suspension pressure sensor (190) and/or one electronic system (195) of the trailer vehicle.

6. Trailer vehicle (100) according to claim 4 or 5, **characterised in that**
- the signal processing device (120) is further adapted to generate positioning information (180) based on the actual position (160') and/or the weight distribution (G) of the transport container (110) on the transport platform (101) such that
- the positioning information (180) contains control instructions (181) for control interventions (182) on a loading device (202) of the truck (200) and/or the truck (200), which cause a positioning in the container transport position (BTP) and/or a balancing of the transport container (110) on the transport platform (101).

7. Trailer vehicle (100) according to at least one of claims 1 to 6, **characterised in that** the signal processing device (120) is configured to detect in the sensor signal (131) of the at least one sensor (130) at least one reference marking, arranged on the transport container (110) and/or the truck (200) and/or the trailer vehicle (100) and/or the transport platform (101), when determining the actual position (160', 170') of the transport container (110) and/or truck (200) relative to the trailer vehicle (100) and/or the transport platform (101).

8. Trailer vehicle (100) according to at least one of claims 1 to 7, **characterised in that** the signal processing device (120) is configured, when determining the actual position (160', 170') of the transport container (110) and/or truck (200) relative to the trailer vehicle (100) and/or to the transport platform (101), the signal processing device (120) is configured to detect at least one component (K) and/or a contour (KT) of the transport container (110) and/or of the truck (200) and/or of the trailer vehicle (100) in the sensor signal (131) of the at least one sensor (130).

9. Trailer vehicle (100) according to at least one of claims 1 to 8, **characterised in that** the at least one sensor (130) for detecting the position of the transport container (110) and/or truck (200) relative to the trailer vehicle (100) is an optical sensor.

10. Trailer vehicle (100) according to at least one of claims 1 to 9, **characterised in that** the at least one sensor (130) for detecting the position of the transport container (110) and/or truck (200) relative to the trailer vehicle (100) is a sensor for detecting a transit time of a signal between the transport container (110) and/or truck (200) and the trailer vehicle (100), the signal processing device (120) being configured to determine the actual position (160', 170') of the transport container (110) and/or truck (200) from the transit time of the signal.

11. Trailer vehicle (100) according to at least one of claims 1 to 10, **characterised in that**
- the target signal generator (140) further provides a target position (230) of the trailer vehicle (100) relative to the truck (200) to the signal processing device (120), wherein
- the signal processing device (120) is further adapted to determine an actual position (230') of the trailer vehicle (100) relative to the truck (200) from the sensor signal (131) of the at least one sensor (130) of the trailer vehicle (100), to compare the actual position (230') with a target position (230) of the trailer vehicle (100) relative to the truck (200), and
- further guidance information (250) based on a deviation between the actual position (230') and the target position (230) of the trailer vehicle (100) relative to the truck (200), such that
- the further guidance information (250) contains control instructions (251) for control interventions (252) on the trailer vehicle (100) suitable for reducing the deviation between the actual position (230') and the target position (230) of the trailer vehicle (100) relative to the truck (200), wherein
- the trailer vehicle (100) has a number of actuators (A) for automatically applying the control instructions (251) on the trailer vehicle (100).

12. System comprising a trailer vehicle according to at least one of claims 1 to 11 and a display device, of which the display device is configured to receive and process the guidance information (150) and to display the control instructions (151) for control interventions (152) on the truck (200) and/or the loading device.

13. Truck (200), for use with a trailer vehicle according to at least one of claims 1 to 11, **characterised in that**
- the truck (200) comprises a display (210) and a further signal transmission device (216) adapted to receive the guidance information (150) for the truck (200) and connected to the display (210), wherein
- the display (210) is configured on the basis of the guidance information (150) for the truck (200), to display the control instructions (151) for a driver of the truck (200) in such a way that the deviation between the actual position (160', 170') and the target position (160, 170) of the transport container (110) and/or truck (200) relative to the trailer vehicle (100) can be reduced manually by the driver.

14. Truck (200) according to claim 13, **characterised in that**
- the signal transmission device (216) is additionally or alternatively connected to a truck controller (215) for automatically moving the truck (200), wherein
- the truck controller (215) is configured on the basis of the guidance information (150) for the truck (200), to automatically apply the control instructions (151) on the truck (200) in such a way that the deviation between the actual position (160', 170') and the target position (160, 170) of the transport container (110) and/or truck (200) relative to the trailer vehicle (100) can be automatically reduced by the truck controller (215).

15. Truck-trailer combination (300), with
- at least one trailer vehicle (100) according to at least one of claims 1 to 11, and a truck (200) according to claim 13 or 14, **characterised in that**
- the deviation between the actual position (160', 170') and the target position (160, 170) of the transport container (110) and/or truck (200) relative to the trailer vehicle (100) can be reduced, optionally on the basis of the guidance information (150) for the truck (200) and/or the further guidance information (250) for the trailer vehicle (100).

## Revendications

1. Véhicule (100) remorqué, comprenant
- une surface (101) de transport pour un récipient (110) de transport,
**caractérisé par**
- un dispositif (120) de traitement du signal,
- au moins un capteur (130) de détection d'une position d'un récipient (110) de transport et/ou d'un camion (200) par rapport au véhicule (100) remorqué et pour la création d'un signal (131) de capteur,
- un dispositif (125) de transmission du signal pour la transmission d'un signal (S) entre le véhicule (100) remorqué et le camion (200) ou un appareil d'indication, ou pour la transmission d'un signal (S) entre le véhicule (100) remorqué et le camion (200) et un appareil d'indication,
- un émetteur (140) de signal de consigne pour disposer d'une position (160, 170) de consigne du récipient (110) de transport et/ou du camion (200) par rapport au véhicule (100) remorqué,
dans lequel
- le dispositif (120) du traitement du signal est relié au au moins un capteur (130), à l'émetteur (140) de signal de consigne et au dispositif (125) de transmission du signal et est constitué,
- pour la détermination d'une position (160', 170') réelle du récipient (110) de transport et/ou du camion (200) par rapport au véhicule (100) remorqué, à partir du signal (131) de capteur du au moins un capteur (130),
- pour la comparaison de la position (160', 170') réelle à la position (160, 170) de consigne du récipient (110) de transport et/ou du camion (200) par rapport au véhicule (100) remorqué, et
- pour la formation d'une information (150) de guidage pour un transbordement du récipient de transport du camion au véhicule remorqué et/ou pour un déchargement du véhicule remorqué en sens contraire, sur la base d'un écart entre la position (160', 170') réelle à la position (160, 170) de consigne du récipient (110) de transport et/ou du camion (200) par rapport au véhicule (100) remorqué, de manière à ce que
- l'information (150) de guidage contienne des instructions (151) de commande pour des interventions (152) de commande sur le camion (200) et/ou un appareil de charge, qui provoquent une diminution de l'écart entre la position (160', 170') réelle à la position (160, 170) de consigne du récipient (110) de transport et/ou du camion (200) par rapport au véhicule (100) remorqué, et dans lequel
- le dispositif (125) de transmission du signal est constitué pour transmettre l'information (150) de guidage au camion (200) et/ou à un appareil d'indication pour un conducteur.

2. Véhicule (100) remorqué suivant la revendication 1, **caractérisé en ce que** la position (160, 170) de consigne du récipient (110) de transport et/ou du camion (200) par rapport au véhicule (100) remorqué représente une plage (178) relative de consigne admissible, formée d'une plage (175) de position relative de consigne admissible et d'une plage (176) angulaire relative de consigne admissible, dans lequel le récipient (110) de transport et/ou le camion (200) et le véhicule (100) remorqué se trouvent les uns par rapport aux autres dans la plage (178) relative de consigne admissible pour un transbordement de récipient couronné de succès.

3. Véhicule (100) remorqué suivant la revendication 1 ou 2, **caractérisé en ce que** l'émetteur (140) de signal de consigne donne, pour des récipients (110) de transport et/ou des camions (200) et/ou des véhicules (100) remorqués différents, des positions (160, 170) de consigne différentes du récipient (110) de transport et/ou du camion (200) par rapport au véhicule (100) remorqué.

4. Véhicule (100) remorqué suivant au moins l'une des revendications 1 à 3, **caractérisé en ce que**
- le au moins un capteur (130) est constitué et est monté pour détecter la position du récipient (110) de transport par rapport à la surface (101) de transport du véhicule (100) remorqué, lors du transbordement du récipient (110) de transport du camion (200) au véhicule (100) remorqué et/ou du véhicule (100) remorqué au camion (200), dans lequel
- le dispositif (120) de traitement du signal est constitué pour déterminer une position (160') réelle du récipient (110) de transport par rapport à la surface (101) de transport à partir du signal (131) de capteur du au moins un capteur (130) et pour la comparer à la position (160) de consigne, donnée par l'émetteur (140) de signal de consigne, du récipient (110) de transport par rapport à la surface (101) de transport, et
- à l'approche des limites de la plage (178) relative de consigne et/ou lorsqu'une position (160) de consigne du récipient (110) de transport par rapport à la surface (101) de transport est atteinte, de préférence la position (BTP) de transport du récipient, pour transmettre un signal (S) au camion (200) au moyen du dispositif (125) de transmission du signal.

5. Véhicule (100) remorqué suivant au moins l'une des revendications 1 à 4, **caractérisé en ce que** le dispositif (120) de traitement du signal est constitué pour déterminer une répartition (G) du poids du récipient (110) de transport sur la surface (101) de transport du véhicule (100) remorqué, à partir d'un signal (186) d'au moins un capteur (185) de la pression des pneumatiques, et/ou d'un capteur (190) de la pression d'un ressort pneumatique ou d'une électronique (195) du véhicule remorqué.

6. Véhicule (100) remorqué suivant la revendication 4 ou 5, **caractérisé en ce que**
- le dispositif (120) de traitement du signal est constitué en outre pour former une information (180) de mise en position, sur la base de la position (160') réelle et/ou de la répartition (G) du poids du récipient (110) de transport sur la surface (101) de transport, de manière à ce que
- l'information (180) de mise en position contienne des instructions (181) de commande pour des interventions (182) de commande sur un appareil (202) de charge du camion (200) et/ou sur le camion (200), qui provoquent une mise dans la position (BTP) de transport du récipient et/ou un équilibrage du récipient (110) de transport sur la surface (101) de transport.

7. Véhicule (100) remorqué suivant au moins l'une des revendications 1 à 6, **caractérisé en ce que** le dispositif (120) de traitement du signal est constitué pour détecter, à la détermination de la position (160', 170') réelle du récipient (110) de transport et/ou du camion (200) par rapport au véhicule (100) remorqué et/ou par rapport à la surface (101) de transport, au moins un repère de référence, disposé sur le récipient (110) de transport et/ou le camion (200) et/ou le véhicule (100) remorqué et/ou la surface (101) de transport, dans la signal (131) de capteur du au moins un capteur (130).

8. Véhicule (100) remorqué suivant au moins l'une des revendications 1 à 7, **caractérisé en ce que** le dispositif (120) de traitement du signal est constitué pour détecter, à la détermination de la position (160', 170') réelle du récipient (110) de transport et/ou du camion (200) par rapport au véhicule (100) remorqué et/ou par rapport à la surface (101) de transport, au moins un composant (K) et/ou un contour (KT) du récipient (110) de transport et/ou du camion (200) et/ou du véhicule (100) remorqué dans le signal (131) de capteur du au moins un capteur (130).

9. Véhicule (100) remorqué suivant au moins l'une des revendications 1 à 8, **caractérisé en ce que** le au moins un capteur (130) est constitué en capteur optique pour la détection de la position du récipient (110) de transport et/ou du camion (200) par rapport au véhicule (100) remorqué.

10. Véhicule (100) remorqué suivant au moins l'une des revendications 1 à 9, **caractérisé en ce que** le moins un capteur (130) est constitué, pour la détection de la position du récipient (110) de transport et/ou du camion (200) par rapport au véhicule (100) remorqué, sous la forme d'un capteur de détection d'un temps de parcours d'un signal entre le récipient (110) de transport et/ou le camion (200) et le véhicule (100) remorqué, dans lequel le dispositif (120) de traitement du signal est constitué pour déterminer la position (160', 170') réelle du récipient (110) de transport et/ou du camion (200) à partir du temps de parcours du signal.

11. Véhicule (100) remorqué suivant au moins l'une des revendications 1 à 10, **caractérisé en ce que**
- l'émetteur (140) de signal de consigne donne au dispositif (120) de traitement du signal en outre une position (230) de consigne du véhicule (100) remorqué par rapport au camion (200), dans lequel
- le dispositif (120) de traitement du signal est constitué en outre pour déterminer une position (230') réelle du véhicule (100) remorqué par rapport au camion (200) à partir du signal (131) de capteur du au moins un capteur (130) du véhicule (100) remorqué, pour comparer la position (230') réelle par rapport à une position (230) de consigne du véhicule (100) remorqué par rapport au camion (200), et
- pour former une autre information (250) de guidage, sur la base d'un écart entre la position (230') réelle à la position (230) de consigne du véhicule (100) remorqué par rapport au camion (200), de manière à ce que
- l'autre information (250) de guidage contienne des instructions (251) de commande pour des interventions (252) de commande sur le véhicule (100) remorqué, qui sont propres à diminuer l'écart entre la position (230') réelle à la position (230) de consigne du véhicule (100) remorqué par rapport au camion (200), dans lequel
- le véhicule (100) remorqué a un certain nombre d'actionneurs (A) pour la transposition automatique des instructions (251) de commande au véhicule (100) remorqué.

12. Système comprenant un véhicule remorqué suivant au moins l'une des revendications 1 à 11 et un appareil d'indication, dont l'appareil d'indication est configuré pour recevoir et traiter l'information (150) de guidage et mettre à l'affichage les instructions (151) de commande pour des interventions (152) de commande sur le camion (200) et/ou l'appareil de charge.

13. Camion (200) à utiliser avec un véhicule remorqué suivant au moins l'une des revendications 1 à 11, **caractérisé en ce que**
- le camion (200) a un affichage (210) et un autre dispositif (216) de transmission du signal, qui est constitué pour la réception de l'information (150) de guidage du camion (200) et est relié à l'affichage (210), et dans lequel
- l'affichage (210) est conçu pour, à partir de l'information (150) de guidage du camion (200), afficher les instructions (151) de commande pour un conducteur du camion (200), de façon à pouvoir diminuer manuellement par le conducteur l'écart entre la position (160', 170') réelle à la position (160, 170) de consigne du récipient (110) de transport et/ou du camion (200) par rapport au véhicule (100) remorqué.

14. Camion (200) suivant la revendication 13, **caractérisé en ce que**
- le dispositif (216) de transmission du signal est relié en outre ou en alternance à une commande (215) de camion pour le déplacement automatique du camion (200), dans lequel
- la commande (215) du camion est constituée pour, à partir de l'information (150) de guidage du camion (200), transposer automatiquement, par la commande (215) du camion, les instructions (151) de commande au camion (200), de manière à diminuer automatiquement l'écart entre la position (160', 170') réelle à la position (160, 170) de consigne du récipient (110) de transport et/ou du camion (200) par rapport au véhicule (100) remorqué.

15. Attelage (300) de camion, comprenant
- au moins un véhicule (100) remorqué suivant au moins l'une des revendications 1 à 11 et un camion (200) suivant l'une des revendications 13 ou 14,
**caractérisé en ce que**
- l'écart entre la position (160', 170') réelle à la position (160, 170) de consigne du récipient (110) de transport et/ou du camion (200) par rapport au véhicule (100) remorqué peut être diminué au choix à partir de l'information (150) de guidage du camion (200) et/ou de l'autre information (250) de guidage du véhicule (100) remorqué.
